# EUROPÄISCHE PATENTSCHRIFT

(11) **EP 4 392 750 B1**
(45) Veröffentlichungstag und Bekanntmachung des Hinweises auf die Patenterteilung: **06.05.2026**
(21) Anmeldenummer: 21772681.9
(22) Anmeldetag: 25.08.2021
(51) Int. Cl.: G01L 3/10, G01L 5/22

(54) **SENSORVORRICHTUNG FÜR EIN KRAFTFAHRZEUG-LENKSYSTEM, LENKSYSTEM FÜR EIN KRAFTFAHRZEUG UND VERFAHREN ZUR HERSTELLUNG EINER SENSORVORRICHTUNG**
SENSOR APPARATUS FOR A MOTOR VEHICLE STEERING SYSTEM, STEERING SYSTEM FOR A MOTOR VEHICLE AND METHOD FOR PRODUCING A SENSOR APPARATUS
APPAREIL DE CAPTEUR POUR UN SYSTÈME DE DIRECTION DE VÉHICULE À MOTEUR, SYSTÈME DE DIRECTION POUR UN VÉHICULE À MOTEUR ET PROCÉDÉ DE PRODUCTION D'UN APPAREIL DE CAPTEUR

(43) Veröffentlichungstag der Anmeldung: 03.07.2024
(73) Patentinhaber: thyssenkrupp Presta AG, 9492 Eschen (LI); thyssenkrupp AG, 45143 Essen (DE)
(72) Erfinder: WENTE, Philipp, 88131 Lindau (DE)
(74) Vertreter: thyssenkrupp Intellectual Property GmbH
(86) Internationale Anmeldenummer: PCT/EP2021/073482
(87) Internationale Veröffentlichungsnummer: WO 2023/025378

(56) Entgegenhaltungen:
- EP-A1- 3 176 554
- WO-A1-2016/175139

## Beschreibung

### Stand der Technik

Die Erfindung betrifft eine Sensorvorrichtung für ein Kraftfahrzeug-Lenksystem, umfassend ein Sensorgehäuse, in dem ein elektrischer Magnetsensor angeordnet und an magnetische Flussleiter angekoppelt ist, wobei die Flussleiter mit Statorelementen verbindbar sind, und wobei die Statorelemente im Magnetfeld eines um eine Achse rotierbaren Magneten positionierbar sind, wobei das Sensorgehäuse mit einer Vergussmasse gefüllt ist. Ein Lenksystem mit einer derartigen Sensorvorrichtung sowie ein Verfahren zur Herstellung einer derartigen Sensorvorrichtung sind ebenfalls Gegenstand der Erfindung.

Eine derartige Sensorvorrichtung dient in einem elektro-mechanischen Hilfskraft-Lenksystem oder einem Steer-by-Wire-Lenksystem eines Kraftfahrzeugs zur Erfassung eines manuellen Lenkbefehls. Die Sensorvorrichtung umfasst mindestens einen Drehsensor, welcher bei einer Drehung einer Lenkwelle durch manuelle Betätigung einer Lenkhandhabe die dadurch bewirkte Verdrehung, und zusätzlich oder alternativ das in die Lenkwelle eingebrachte manuelle Lenkmoment erfasst und in elektrische Steuersignale zur Ansteuerung eines elektrischen Lenkantriebs umsetzt, der einen entsprechenden Lenkeinschlag der gelenkten Rädererzeugt.

Zur Erfassung des Lenkbefehls sind Drehsensoren mit einer magnetischen Sensorvorrichtung bekannt, welche als Drehmomentsensor oder Drehwinkelsensor ausgebildet sein können, oder als kombinierte Drehmoment- und Drehwinkelsensoren. Eine gattungsgemäße magnetische Sensorvorrichtung der eingangs genannten Art ist beispielsweise in der DE 10 2015 122 179 A1 oder der DE 10 2016 124 370 A1 beschrieben. Diese umfasst zwei Statorelemente und einen Magneten, der relativ zu den Statorelementen drehbar angeordnet, und derart ausgestaltet ist, dass er einen von der relativen Winkelorientierung abhängigen Magnetfluss in die Statorelemente einkoppelt. Bei einem Drehmomentsensor ist der Magnet mit einem ersten Lenkwellenteil verbunden, welches über einen Drehstab torsionselastisch mit einem zweiten Lenkwellenteil verbunden ist, an dem die Statorelemente angebracht sind. Durch die Messung des in die Statorelemente eingekoppelten Magnetflusses kann die relative Verdrehung der beiden Lenkwellenteile bestimmt werden, die mit der Größe des eingebrachten Lenkmoments korrespondiert. Zur Realisierung eines Drehwinkelsensors ist es möglich, durch eine drehfeste Fixierung der Statorelemente den Drehwinkel einer relativ dazu drehbaren, einen Magneten aufweisenden Lenkwelle zu bestimmen.

Die beiden Statorelemente sind über magnetische Flussleiter an einen magneto-elektrischen Magnetsensor angekoppelt, der beispielsweise ein Hall- oder magnetoresistives (GMR-) Sensorelement umfasst, in dem der über die Flussleiter eingeleitete Magnetfluss in ein elektrisches Signal umgesetzt wird.

Die magnetischen Flussleiter sind aus einem magnetisch gut leitfähigen Material ausgebildet, beispielsweise aus Eisenblech. Um eine möglichst effiziente und sichere Übertragung des Magnetflusses von den Statorelementen auf den Magnetsensor durch eine diesbezüglich optimierte magnetische Wirkverbindung zu gewährleisten, ist eine definierte relative Anordnung der Flussleiter und des Magnetsensors erforderlich. Dabei muss eine über die Serienfertigung gleichbleibende, im Betrieb unveränderbare relative räumliche Orientierung sichergestellt sein, wobei Beeinträchtigungen durch externe Einflüsse wie Verunreinigungen oder dergleichen, möglichst vermieden werden sollen. Insbesondere müssen die von dem zu messenden Magnetfluss durchsetzten Übergänge zwischen den Flussleitern und den Statorelementen und dem Magnetsensorelement innerhalb enger Toleranzen definierte magnetische Eigenschaften haben.

In dem genannten Stand der Technik ist beschrieben, die Statorelemente, die Flussleiter und den Magnetsensor im durchgehenden Innenraum eines Sensorgehäuses anzubringen. Die Flussleiter sind an den Statorelementen fixiert, und erstrecken sich in dem offenen Innenraum des Sensorgehäuses bis zum Magnetsensor hin. Dadurch wird zwar eine ansatzweise Positionierung der Flussleiter relativ zum Magnetsensor ermöglicht. Nachteilig ist jedoch, dass durch die fixe Verbindung die Ausrichtung mit den Statorelementen und die Montage aufwendig ist, und die magnetische Ankopplung zwischen den Flussleitern und dem Magnetsensor empfindlich gegenüber im Betrieb unvermeidlichen mechanischen Störeinflüssen ist, wie etwa Erschütterungen, Vibrationen und dergleichen. Außerdem ist nicht auszuschließen, dass Verunreinigungen oder Fremdkörper durch die Lagerung des darin drehbar angeordneten Statormoduls in das Sensorgehäuse eindringen und den magnetischen Übergang zwischen Flussleiter und Magnetsensor stören.

Eine Sensorvorrichtung der eingangs genannten Art ist aus der WO 2016/175139 A1. Diese ist jedoch aufwendig in der Fertigung und relativ unflexibel im Einsatz.

Angesichts der vorangehend erläuterten Problematik ist es eine Aufgabe der vorliegenden Erfindung, einen verbesserten Aufbau zu ermöglichen.

### Darstellung der Erfindung

Diese Aufgabe wird erfindungsgemäß gelöst durch die Sensorvorrichtung mit den Merkmalen des Anspruchs 1, das Lenksystem gemäß Anspruch 12 und das Verfahren zur Herstellung einer Sensorvorrichtung gemäß Anspruch 13. Vorteilhafte Weiterbildungen ergeben sich aus den Unteransprüchen.

Bei einer Sensorvorrichtung für ein Kraftfahrzeug-Lenksystem, umfassend ein Sensorgehäuse, in dem ein elektrischer Magnetsensor angeordnet und an magnetische Flussleiter angekoppelt ist, wobei die Flussleiter mit Statorelementen verbindbar sind, und wobei die Statorelemente im Magnetfeld eines um eine Achse rotierbaren Magneten positionierbar sind, wobei das Sensorgehäuse mit einer Vergussmasse gefüllt ist, ist erfindungsgemäß vorgesehen, dass die Flussleiter durch Durchgangsöffnungen in dem Sensorgehäuse hindurchgeführt sind, wo sie mit den Statorelementen verbunden sind.

Gemäß der Erfindung ist der Magnetsensor innerhalb des Sensorgehäuses angeordnet, und die Statorelemente außerhalb. Die Flussleiter sind innerhalb des Sensorgehäuses an den Magnetsensor angekoppelt, d.h. wirkverbunden zur Erzeugung eines optimierten magnetischen Übergangs, und durch Durchgangsöffnungen, die in eine Wandung des Sensorgehäuses eingebracht sind, zu den Statorelementen hindurchgeführt und an diese angekoppelt, d.h. ebenfalls wirkverbunden zur Erzeugung eines optimierten magnetischen Übergangs.

Die Wandung mit den Durchgangsöffnungen verläuft zwischen dem Magnetsensor und den Statorelementen. Definitionsgemäß begrenzt diese Wandung somit bei der Erfindung einen Innenraum des Sensorgehäuses, in dem sich der Magnetsensor befindet, gegenüber den außerhalb des Sensorgehäuses angeordneten Statorelementen. Die Flussleiter erstrecken sich von dem Magnetsensor durch den Innenraum, gehen durch die Wandung hindurch nach außen, wo sie mit den Statorelementen verbunden sind. Dadurch, dass die Flussleiter durch die Wandung gegenüber dem Außenbereich, wo sich die Statorelemente befinden, mechanisch abgeschirmt ist, ergibt sich bereits ein verbesserter Schutz der magnetischen Verbindung zwischen Flussleiter und Magnetsensor, als bei dem offen durchgehenden Innenraum im Stand der Technik.

Erfindungsgemäß ist der durch die Wandung von den Statorelementen separierte Innenraum des Sensorgehäuses mit einer Vergussmasse gefüllt, bevorzugt einem Kunstharz. Als Vergussmasse wird ein Vergussharz eingesetzt, welches als Harz-Härter-System in flüssiger Form in das Sensorgehäuse eingefüllt wird, und nach dem Aushärten einen festen Block bildet, der das Sensorgehäuse zumindest teilweise, bevorzugt überwiegend ausfüllt, zumindest im Bereich des Magnetsensors. Der Magnetsensor und die innerhalb des Sensorgehäuses verlaufenden Abschnitte der Flussleiter, die sich von den Durchgangsöffnungen bis zur Ankopplung an den Magnetsensor erstrecken, werden zumindest abschnittweise, bevorzugt vollständig beim Einfüllen von dem flüssigen Vergussharze umflossen und eingeschlossen, und sind nach dem Aushärten in den durch die ausgehärtete Vergussmasse gebildeten festen Block eingebettet. Dadurch werden die Flussleiter und der Magnetsensor in ihrer definierten räumlichen Positionierung und Orientierung zueinander, die vor dem Einfüllen des Vergussharzes vorgegeben wurde, form- und stoffschlüssig, fest und unlösbar festgelegt. Dadurch, dass die Vergussmasse die Wandungen des Sensorgehäuses, insbesondere die die Durchgangsöffnungen aufweisende Wandung, kontaktiert, ist der durch die ausgehärtete Vergussmasse gebildete feste Block auch zumindest stoffschlüssig, bevorzugt auch formschlüssig im Innenraum mit dem Sensorgehäuse verbunden, zumindest im Bereich der Durchgangsöffnungen. Dadurch sind die fest in die Vergussmasse eingebetteten Flussleiter und der Magnetsensor in dem Sensorgehäuse ebenfalls definiert positioniert und fixiert.

Ein wesentlicher Vorteil der Erfindung ist, dass der magnetische Übergang zwischen den Flussleitern und dem Magnetsensor einfach definiert vorgegeben werden kann, beispielsweise durch an dem Magnetsensor mechanisch mit vorgegebenem Spiel oder spielfrei anliegenden Ankopplungsabschnitten, wobei die relative Positionierung über die gesamte Lebensdauer der Sensorvorrichtung unveränderbar ist. Dabei ist die durch die Ankopplung erzeugte magnetische Wirkverbindung zwischen den Flussleitern und dem Magnetsensor auch gegen extreme äußere Einflüsse geschützt, beispielsweise durch Vibrationen und dergleichen, thermische Belastungen, und potentiell schädliche Substanzen. Im Ergebnis kann eine vorteilhaft erhöhte Betriebssicherheit realisiert werden.

Ein Vorteil der Erfindung ist weiterhin, dass die im Innenraum des Sensorgehäuses verlaufenden, inneren Teilabschnitte der Flussleiter und der Magnetsensor in die Vergussmasse eingebettet sind, und die durch die Durchgangsöffnungen aus der besagten Wandung herausragenden, äußeren Teilabschnitte der Flussleiter, die an die Statorelemente angekoppelt werden, nicht. Dadurch kann fertigungstechnisch eine erhöhte Flexibilität realisiert werden, beispielsweise, um die magnetische Verbindung zwischen den Flussleitern und den Statorelementen erst nach dem Einbetten und Aushärten der Vergussmasse zu erzeugen.

Das Sensorgehäuse kann ein Kunststoff-Spritzgussteil aufweisen. Es kann vorteilhaft vollständig oder teilweise aus einem thermoplastischen Polymer ausgebildet sein, beispielsweise als Spritzgussteil. Die Durchgangsöffnungen können beim Spritzgießen einstückig eingebracht sein, so dass eine rationelle Fertigung ermöglicht wird.

Eine vorteilhafte Ausführung kann dadurch realisiert sein, dass das Sensorgehäuse als offener Kasten ausgebildet ist, der oben eine offene Oberseite, unten einen Boden und dazwischen angeordnete Seitenwände aufweist.

Bevorzugt kann vorgesehen sein, dass die Durchgangsöffnungen in einem unten angeordneten Boden des Sensorgehäuses angeordnet sind. Das Sensorgehäuse kann beispielsweise kasten- oder becherförmig ausgebildet sein, wobei eine definitionsgemäß untenliegende Bodenwandung den Boden bildet, in dem die Durchgangsöffnungen angeordnet sind. Vom Boden aus erstrecken sich Seitenwandungen nach oben. Die von den Seitenwandungen begrenzte Oberseite kann offen ausgebildet sein, so dass das Sensorgehäuse in seiner Grundform als offener Kasten oder Becher ausgebildet ist. Das Sensorgehäuse kann einschließlich Boden und Seitenwandungen mit Vorteil als einstückiges Kunststoff-Spritzgussteil ausgebildet sein.

Die Flussleiter können bevorzugt als Blechformteile ausgebildet sein, beispielsweise aus Eisen- oder Stahlblech mit definierten magnetischen Eigenschaften. Die mechanische Fertigung kann rationell durch Kaltumformung wie Stanzen, Biegen, Pressen und dergleichen erfolgen. Gegebenenfalls können die fertig geformten Blechformteile einer thermischen Behandlung und zusätzlich oder alternativ einer magnetischen Behandlung unterzogen werden, um die magnetischen Eigenschaften zu homogenisieren bzw. zu optimieren.

Als Vergussmasse kann bevorzugt eine Kunstharzmasse eingesetzt werden, die als flüssiges Harz-Härter-System in das Sensorgehäuse eingefüllt wird und durch Vernetzung aushärtet, beispielsweise ein Epoxydharz. Es können im Prinzip bekannte Harz-Härter-Systeme ausgewählt werden, die hinsichtlich der Verarbeitung und der angestrebten mechanischen, thermischen, elektrischen, magnetischen und sonstigen relevanten Eigenschaften optimiert sind, und beispielsweise in ihrem flüssigen Ausgangszustand eine an die Verarbeitung angepasste Viskosität haben, bei Raumtemperatur aushärten, und in ausgehärteten, festen Zustand eine hohe mechanische Festigkeit und elektrische Isolation bieten, und widerstandsfähig gegenüber thermischen und chemischen Einflüssen sind.

Eine vorteilhafte Ausführung ist, dass die Flussleiter in die Durchgangsöffnungen passgenau eingesetzt sind. Dabei sind Form und Abmessungen des offenen Querschnitts einer Durchgangsöffnung derart an den Querschnitt eines Flussleiters angepasst, dass zwischen dem umlaufenden Rand der Durchgangsöffnung und dem Flussleiter ein definierter Spalt vorgegeben wird. Bevorzugt hat der Spalt eine definierte Spaltbreite, so dass das in flüssigem Zustand in das Sensorgehäuse eingefüllte Harz aufgrund seiner Viskosität und Oberflächenspannung beim Einfüllen den Spalt nicht nach außen durchdringt. Konkret sind dabei die initiale Viskosität sowie der zeitliche Anstieg der Viskosität beim Aushärten maßgeblich, sowie die Prozessparameter beim Einfüllen des Harzes.

Bevorzugt kann durch das passgenaue Einsetzen die Spaltbreite so bemessen sein, dass beispielsweise ein unter Atmosphärendruck eingegossenes Harz entgegen der Schwerkraft mindestens so lange innerhalb des Spalts zurückgehalten wird und dabei aushärtet, so dass es im Wesentlichen nicht nach außen durch die Wandung in Richtungder Statorelemente austritt.

Es kann weiterhin vorteilhaft sein, dass die Flussleiter beim passgenauen Einsetzen in den Durchgangsöffnungen definiert geführt und gehalten werden. Durch ein relativ geringes Spiel können die Flussleiter in den Durchgangsöffnungen quer zur Durchgangsrichtung formschlüssig aufgenommen sein, um eine Orientierung relativ zum Sensorgehäuse zu erzeugen. Die Durchgangsöffnungen können dadurch eine Art Führungs- oder Positionierelemente bilden, um die Flussleiter vor dem Einfüllen der Vergussmasse vorläufig zu fixieren. Dadurch kann die Montage und Fertigung vereinfacht werden.

Es kann vorteilhaft sein, dass die Flussleiter beim Einsetzen in die Durchgangsöffnung elastisch geklemmt werden. Dies kann dadurch realisiert werden, dass der Flussleiterquerschnitt Übermaß gegenüber dem Öffnungsquerschnitt hat, so dass die Durchgangsöffnung in der beispielsweise aus einem Kunststoff ausgebildeten Wandung beim Einsetzen elastisch aufgeweitet wird, und den Flussleiter kraftschlüssig hält. Dadurch wird die Positionierung und Montage erleichtert. Darüber hinaus kann der Spalt durch die elastische Verspannung eine Spaltbreite nahe null haben, so dass die flüssige Vergussmasse beim Eingießen sicher innerhalb des Sensorgehäuses verbleibt, und nicht nach außen dringt.

Als Weiterbildung kann vorgesehen sein, dass die Flussleiter und die Durchgangsöffnungen korrespondierende Dichtungselemente aufweisen. Als Dichtelemente können beispielsweise am Rand der Durchgangsöffnung umlaufende Dichtlippen, Vorsprünge oder dergleichen vorgesehen sein, die sich dichtend von an den Umfang eines darin eingesetzten Flussleiters elastisch anschmiegen. Derartige Dichtelemente können im Kunststoff-Spritzguss einstückig angeformt sein.

Bevorzugt kann vorgesehen sein, dass die Flussleiter von innen durch die Durchgangsöffnungen eingesetzt sind. Dadurch kann eine optimierte Positionierung der Flussleiter relativ zum Magnetsensor erfolgen, der sich bei Einsetzen vor der Wandung mit den Durchgangsöffnungen befindet. Beispielsweise können die Flussleiter einen geraden Abschnitt (Einsetzabschnitt) haben, der bezüglich der beim Einsetzen in der definitionsgemäß von innen nach außen gerichteten Einsetzrichtung vorne liegt, und der durch die Durchgangsöffnung hindurchgesteckt wird, und einen gekröpften oder abgewinkelten hinteren Abschnitt, der einen Ankopplungsabschnitt zur Ankopplung an den Magnetsensor aufweist. Der Ankopplungsabschnitt kann beispielsweise flächig ausgebildet sein, zur Erzeugung einer optimierten magnetischen Wirkverbindung definiert relativ zum Magnetsensor positioniert werden, beispielsweise in mechanischen Kontakt gebracht werden.

Es kann vorteilhaft sein, dass die Flussleiter und die Durchgangsöffnungen korrespondierende Anschlagelemente aufweisen. Derartige Anschlagelemente können beispielsweise vom Flussleiter quer über den offenen Durchgangsquerschnitt der Durchgangsöffnung vorstehende Vorsprünge, Absätze oder dergleichen umfassen, die beim Einsetzen in Einsetzrichtung - also bevorzugt von innen nach außen - gegen die Wandung im Randbereich der Durchgangsöffnung anschlagen und das Einsetzen begrenzen. Dadurch wird die Positionierung der Flussleiter vereinfacht. Es ist auch denkbar und möglich, dass die Flussleiter und/oder die Durchgangsöffnungen in Einsetzrichtung keilförmig oder konisch zusammenlaufen, so dass eine Art Kegelpassung realisiert wird, welche als Anschlag dient und eine Dichtwirkung zur Verfügung stellen kann.

Es kann vorteilhaft sein, dass zusätzlich oder alternativ zur Positionierung der Flusssammler durch die Durchgangsöffnungen im Sensorgehäuse weitere Positionier- oder Befestigungselemente im Sensorgehäuse oder an den Flusssammlern vorgesehen sind. Solche Befestigungselemente können beispielsweise als ineinandergreifende Zähne und/oder Nuten an den Flusssammlern beziehungsweise im Sensorgehäuse ausgebildet sein. Vorzugsweise sind diese zusätzlichen Elemente einstückig an den Flusssammlern oder dem Sensorgehäuse ausgebildet.

Zur optimierten Verbindung mit dem Magnetsensor und/oder den Statorelementen können die Flussleiter Ankopplungsabschnitte aufweisen. Die Ankopplungsabschnitte können bezüglich ihrer Form und Abmessungen an den Bereich eines Statorelements angepasst sein, in dem der zu messende Magnetfluss abgegriffen werden soll, und bevorzugt zusätzlich oder alternativ an den Bereich des Magnetsensors, in den der zu messende Magnetfluss eingeleitet wird. Durch die angepasste Form und Fläche kann der für die Messung relevante Magnetfluss in vorteilhafter Weise möglichst verlustarm über die Flussleiter von den Statorelementen zum Magnetsensor übertragen werden. Dank der Erfindung sind die mit dem Magnetsensor magnetisch wirkverbundenen Ankopplungsabschnitte im Innenraum des Sensorgehäuses in die Vergussmasse eingebettet und sicher gegen Störeinflüsse geschützt.

Eine vorteilhafte Ausführung kann vorsehen, dass der Magnetsensor auf einer Leiterplatte angebracht ist. Die Leiterplatte, die gleichbedeutend auch als Platine oder PCB (printed circuit board) bezeichnet wird, dient als mechanischer Träger für das eigentliche Sensorelement, und weist mit dem Sensorelement verbundene elektrische Leiterbahnen zum elektrischen Anschluss auf. Die Leiterplatte kann bevorzugt zur definierten Fixierung und Positionierung im Innenraum des Sensorgehäuses ausgestaltet sein, so dass der darauf angebrachte Magnetsensor ebenfalls im Sensorgehäuse definiert orientiert und positioniert ist, insbesondere relativ zu den Durchgangsöffnungen und den darin eingesetzten Flussleitern. Hierzu können die Leiterplatte und das Sensorgehäuse miteinander korrespondierende, zur Verbindung zusammenwirkende Fixier- und/oder Positionierelemente aufweisen, beispielsweise Führungs-, Verbindungs- und/oder Befestigungselemente, die bevorzugt formschlüssig und/oder kraftschlüssig zusammenwirken können.

Vorzugsweise kann die Leiterplatte in die erfindungsgemäß in das Sensorgehäuse eingefüllte Vergussmasse eingebettet sein, zur formschlüssigen Fixierung in dem Sensorgehäuse, und ebenfalls zur Fixierung des Magnetsensors auf der Leiterplatte.

Zum Anschluss an eine Steuereinheit des Lenksystems kann bevorzugt vorgesehen sein, dass ein aus dem Sensorgehäuse herausgeführtes Anschlusskabel an den Magnetsensor angeschlossen ist. Das Anschlusskabel kann direkt an den Magnetsensor angeschlossen sein, oder an die zum Magnetsensor führenden Leiterbahnen der Leiterplatte.

Das Sensorgehäuse kann fest mit der Sensorvorrichtung verbunden sein, wobei die Flussleiter mit den Statorelementen verbunden sind, beispielsweise ebenfalls fest verbunden. Es ist ebenfalls denkbar und möglich, dass das Sensorgehäuse lösbar mit der Sensorvorrichtung verbunden ist, wobei die magnetische Wirkverbindung zwischen den nach außen aus dem Sensorgehäuse vorstehenden äußeren Abschnitten (Teilabschnitten) der Flussleiter und den Statorelementen ebenfalls lösbar ist. Das Sensorgehäuse kann beispielsweise zur Verbindung lösbar, bevorzugt formschlüssig in eine korrespondierende Aufnahme der Sensorvorrichtung eingesetzt werden, zur magnetischen Ankopplung an die Statorelemente.

Es ist vorteilhaft, dass eine Sensorvorrichtung, welche einzelne oder Kombinationen der vorangehend beschriebenen Merkmale aufweist, einen Drehmomentsensor und/oder einen Drehwinkelsensor umfasst. Ein Drehmomentsensor kann dadurch realisiert werden, dass an einem ersten Wellenteil ein Magnet angebracht ist, und an einem mit dem ersten Wellenteil über einen torsionselastischen Drehstab verbundenen zweiten Wellenteil die Statorelemente. Die Statorelemente können den Magneten koaxial umgeben. Bei einem Drehwinkelsensor ist ein Magnet an einem drehbaren Wellenteil angebracht, und die Statorelemente relativ dazu bezüglich der Drehung feststehend. Ein Drehmoment- und ein Drehwinkelsensor können auch als integrierte Einheit ausgebildet sein. In jedem Fall ermöglicht die Erfindung eine robustere Ausgestaltung und eine verbesserte Messgenauigkeit und Betriebssicherheit über die gesamte Betriebsdauer.

Bevorzugt kann ein Lenksystem für ein Kraftfahrzeug eine erfindungsgemäße Sensorvorrichtung aufweisen. Daraus resultiert eine vorteilhaft höhere Betriebssicherheit.

Die Erfindung umfasst weiterhin ein Verfahren zur Herstellung einer Sensorvorrichtung, bei dem in einem Sensorgehäuse ein Magnetsensor magnetisch an Flussleiter angekoppelt ist, wobei die Flussleiter magnetisch an im Magnetfeld eines Magneten positionierbare Statorelemente ankoppelbar sind,
umfassend die Schritte:
a) Bereitstellen eines Durchgangsöffnungen aufweisenden Sensorgehäuses,
b) Einsetzen von Flussleitern durch die Durchgangsöffnungen hindurch,
c) Positionieren eines Magnetsensors in dem Sensorgehäuse zur magnetischen Ankopplung an die Flussleiter,
d) Einfüllen eines flüssigen, aushärtbaren Vergussharzes in das Sensorgehäuse,
e) Aushärten des Vergussharzes,
f) Ankoppeln der Flussleiter an die Statorelemente.

Bezüglich der nachfolgenden Erläuterung des Verfahrens wird in vollem Umfang Bezug genommen auf die oben im Zusammenhang mit dem Aufbau der Sensorvorrichtung gemachten Ausführungen.

Das Sensorgehäuse ist bevorzugt kastenförmig oder becherförmig ausgebildet, wobei eine Wandung Durchgangsöffnungen aufweist. Bevorzugt können die Durchgangsöffnungen im Boden angeordnet sein, der durch eine definitionsgemäß untenliegende Bodenwandung gebildet wird, und von dem sich Seitenwandungen nach oben erstrecken. Der Boden und die Seitenwandungen umschließen den Innenraum des Sensorgehäuses.

Bevorzugt kann das Sensorgehäuse als Kunststoff-Spritzgussteil aus einem thermoplastischen Polymer bereitgestellt werden, bevorzugt einstückig ausgebildet.

Im nächsten Schritt (b) erfolgt das Einsetzen von Flussleitern durch die Durchgangsöffnungen hindurch, vorzugsweise vom Innenraum des Sensorgehäuses aus. Dadurch, dass die Durchgangsöffnungen in einem bezüglich der Schwerkraft untenliegenden Boden des Sensorgehäuses angeordnet sind, kann die Einsetzrichtung bevorzugt von oben nach unten weisen. Dabei werden die Flussleiter derart durch die Wandung, also bevorzugt den Boden, hindurchgesteckt, dass ein innerer Teilabschnitt der Flussleiter sich vom Boden aus in den Innenraum erstreckt, und ein äußerer Teilabschnitt vom Boden aus nach außen, konkret nach unten aus dem Sensorgehäuse heraus.

Die Durchgangsöffnungen und die Flussleiter können wie oben beschrieben angepasst und ausgestaltet sein, so dass jeweils zwischen dem umlaufenden Rand der Durchgangsöffnung und dem Flussleiter ein Spalt mit definierter Spaltbreite vorgegeben wird. Die Spaltbreite kann zumindest abschnittweise nahezu null oder null sein, so dass die Flussleiter formschlüssig in den Durchgangsöffnungen aufgenommen sind, und dadurch relativ zum Sensorgehäuse positioniert sind. Wie oben beschrieben, können die Flussleiter auch elastisch in den Durchgangsöffnungen geklemmt oder eingespannt sein, so dass sie selbsttätig in Position gehalten werden.

In einem nachfolgenden oder auch vorangehenden Schritt (c) wird ein Magnetsensor in dem Sensorgehäuse derart positioniert und fixiert, dass die innerhalb des Innenraums angeordneten inneren Teilabschnitte der Flussleiter in magnetischer Wirkverbindung relativ zum Magnetsensor positioniert werden, so dass ein effektiver Übergang des Magnetflusses zwischen den Flussleitern und dem Magnetsensor erzeugt wird. Beispielsweise können innere Ankopplungsabschnitte der Flussleiter den Magnetsensor mechanisch kontaktieren. Dadurch wird im Prinzip eine Anordnung erzeugt, in der die in die Durchgangsöffnungen eingesetzten Flussleiter und der im Sensorgehäuse angeordnete Magnetsensor zur Optimierung eines durchgeleiteten Magnetflusses relativ zueinander angeordnet sind. Diese genaue relative Positionierung erhöht die mögliche Messgenauigkeit und wird durch die erfindungsgemäße Anordnung der Flussleiter in den Durchgangsöffnungen vereinfacht und verbessert. Im Stand der Technik mit den von den Statorelementen frei abstehenden Flussleitern ist dies nicht erreichbar.

Im nächsten Schritt (d) erfolgt das Einfüllen eines flüssigen, aushärtbaren Vergussharzes in das Sensorgehäuse. Als Vergussmasse wird ein Harz-Härter-System, bevorzugt auf Basis von Epoxydharz oder dergleichen, in flüssiger Form bereitgestellt und in den Innenraum des Sensorgehäuses eingegossen. Bevorzugt wird das Sensorgehäuse dabei so ausgerichtet, dass der Boden in Schwerkraftrichtung unten liegt, und das flüssige Harz durch die offene Oberseite eingegossen werden kann. Dadurch umfließt das flüssige Harz die inneren Teilabschnitte der Flussleiter und zumindest teilweise, bevorzugt vollständig den Magnetsensor.

Das zunächst flüssige Kunstharz steht an dem Spalt zwischen den Flussleitern und den Rändern der Durchgangsöffnungen an. Erfindungsgemäß sind die Querschnitte der Flussleiter und der Durchgangsöffnungen bevorzugt so aufeinander abgestimmt, dass die Spaltbreite hinreichend klein ist, so dass das zunächst flüssige Harz aufgrund seiner gegebenen initialen Viskosität und Oberflächenspannung unter dem Einfluss der Schwerkraft innerhalb der Zeitdauer bis zur Aushärtung nicht oder nicht wesentlich durch den Spalt hindurch nach außen dringt. Es kann dabei auch vorgesehen sein, dass die Flussleiter die Durchgangsöffnungen wie Stopfen abdichtend verschließen, so dass die Spaltbreite bei null liegt oder zumindest sehr gering ist. Auf jeden Fall wird das flüssig eingefüllte Harz ohne zusätzliche Maßnahmen zur Abdichtung in dem Sensorgehäuse gehalten, und härtet im nachfolgenden Schritt (e) mit fortschreitender Zeit durch Vernetzung aus, bis es zu einem festen, den Innenraum zumindest teilweise ausfüllenden Block erstarrt, der bevorzugt einen festen Block bildet.

Ein Vorteil des erfindungsgemäßen Verfahrens ist, dass das Einfüllen des flüssigen Harzes so schonend erfolgen kann, dass nur geringe fluiddynamische Kräfte auf die Flussleiter und den Magnetsensor ausgeübt werden, so dass diese mit hoher Genauigkeit in ihrer vorgegebenen relativen Position verbleiben. Mit anderen Worten wird im bezüglich der magnetischen Wirkverbindung optimierte Positionierung nicht gestört oder beeinträchtigt. Dies ist ein wesentlicher Vorteil gegenüber Spritzgussverfahren, bei denen die Kunststoffschmelze mit hohem Druck und hoher Geschwindigkeit eingespritzt wird, wodurch die Gefahr von unerwünschten Relativbewegungen auftritt.

Vorzugsweise erfolgt das Einfüllen oder Eingießen des Vergussharzes in einem Niederdruckverfahren. Bevorzugt kann das Einfüllen des flüssigen Harzes unter Atmosphärendruck durch Schwerkraft in das kasten- oder becherförmige Sensorgehäuse erfolgen. Dabei wirken nur relativ geringe fluiddynamische Kräfte, so dass die Flussleiter nicht oder zumindest nicht merklich aus ihrer durch die Durchgangsöffnungen vorgegebenen Position bewegt werden.

Bevorzugt sind beim Einfüllen des flüssigen Harzes die Durchgangsöffnungen in einem Boden des Sensorgehäuses angeordnet, der beim Einfüllen des flüssigen Vergussharzes bezüglich der Schwerkraft unten liegt. Das flüssige Harz wird dabei bevorzugt durch die von den Seitenwandungen begrenzte offene Oberseite eingegossen.

Es kann vorgesehen sein, dass eine den Magnetsensor tragende Leiterplatte in dem Sensorgehäuse positioniert wird, und zwar vor dem Einfüllen des Harzes.

Die Montage kann dadurch vereinfacht werden, dass die Flussleiter von innen bis zum Anschlag von Anschlagelementen gegen korrespondierende Anschlagelemente der Durchgangsöffnung eingeführt werden. Die Anschlagelemente können beispielsweise korrespondierende Formschlusselemente umfassen, die beim gegenseitigen Kontakt im Anschlag eine genaue Positionierung der Flussleiter in Einsetzrichtung bezüglich des Bodens erzeugen.

Nach dem Aushärten des Vergussharzes kann ein magnetisches Ankoppeln der Flussleiter an Statorelemente erfolgen, die im Magnetfeld eines um eine Achse rotierbaren Magneten angeordnet sind. In den äußeren, nach außen durch den Boden hinausragenden Teilabschnitten weisen die Flussleiter bevorzugt äußere Ankopplungsabschnitte auf, die zur Erzeugung eines effektiven magnetischen Übergangs mit den Statorelementen verbindbar sind, d.h. mit diesen in wirkverbindbar sind. Ein Vorteil der Erfindung ist, dass die Flussleiter in den Durchgangsöffnungen, und nach dem Aushärten der Vergussmasse auch mit ihren gesamten inneren Teilabschnitten räumlich fest relativ zum Sensorgehäuse fixiert sind, dass auch die nach außen vorstehenden, äußeren Teilabschnitte eindeutig und definiert positioniert sind. Dadurch kann auch eine räumlich genau definierte Verbindung an die Statorelemente einfacher erzeugt werden, wodurch die Montage vereinfacht und die Betriebssicherheit erhöht wird.

Es kann vorgesehen sein, dass vor dem Aushärten der Vergussmasse ein Deckelelement an dem Sensorgehäuse angebracht wird. Durch das Deckelelement kann die offene Oberseite zumindest teilweise abgedeckt oder geschlossen werden. Dadurch, dass das Deckelelement zumindest teilweise in die Vergussmasse eintaucht, kann es ohne weitere Verbindungsmittel fest mit dem Sensorgehäuse fixiert werden.

Es kann weiter vorgesehen sein, dass das Deckelelement als Niederhalter in Montagerichtung für die Flussleiter und/oder den Magnetsensor und/oder die Leiterplatte fungiert. Der Niederhalter bildet ein zusätzliches Positioniermittel, welches die relative Positionierung zusätzlich absichert.

Bei einer Sensorvorrichtung für ein Kraftfahrzeug-Lenksystem, umfassend ein Sensorgehäuse, in dem ein elektrischer Magnetsensor angeordnet und an magnetische Flussleiter angekoppelt ist, wobei die Flussleiter mit Statorelementen verbindbar sind, wobei die Statorelemente im Magnetfeld eines um eine Achse rotierbaren Magneten positionierbar sind, wobei der Magnetsensor auf einer Leiterplatte angeordnet ist, die in dem Sensorgehäuse fixiert ist, kann vorgesehen sein, dass das Sensorgehäuse mit der Leiterplatte korrespondierende Positioniermittel aufweist zur definierten Positionierung der Leiterplatte in dem Sensorgehäuse, und das Sensorgehäuse mit einer Vergussmasse gefüllt ist, in welcher die Leiterplatte und die Positioniermittel zumindest teilweise eingebettet und unlösbar miteinander fixiert sind.

Dabei ist die den Magnetsensor tragende Leiterplatte unmittelbar in Positioniermitteln des Sensorgehäuses positionsgenau fixiert. Mit anderen Worten kann die Leiterplatte direkt im Sensorgehäuse orientiert und positioniert werden, insbesondere ohne die im Stand der Technik nachteiligen Modulgehäuse oder Zwischenträger. Die Flussleiter sind ebenfalls bevorzugt unmittelbar mit dem Sensorgehäuse verbunden, beispielsweise durch Ausrichtmittel.

Durch die Positioniermittel kann der Vorteil realisiert werden, dass die Genauigkeit der Positionierung des Magnetsensors im Wesentlichen nur durch die Maßtoleranzen der Positioniermittel bestimmt wird, die diesbezüglich mit geringem Aufwand optimiert werden können.

Weiterhin können zumindest Teile der Leiterplatte samt Magnetsensor und die Positioniermittel erfindungsgemäß von einer festen Vergussmasse umschlossen sein, die das Sensorgehäuse zumindest teilweise ausfüllt, so dass eine eindeutig definierte, stoff- und formschlüssige Fixierung und Positionierung der Leiterplatte relativ zu den Positioniermitteln und damit auch im Innenraum relativ zum Sensorgehäuse erzeugt wird.

Ein Vorteil der Erfindung ist, dass eine hohe Genauigkeit der Positionierung bei der Montage mit geringerem Aufwand ermöglicht wird, da lediglich die korrespondierenden Positioniermittel zusammengefügt werden müssen. Die verbesserte Montage ermöglicht eine höhere Messgenauigkeit der Sensorvorrichtung bei geringerem Fertigungsaufwand insbesondere bei hohen Stückzahlen in der Serienfertigung. Die Einbettung in die Vergussmasse kann ebenfalls mit geringem Aufwand realisiert werden, und sorgt für eine besonders robuste Anordnung, die unempfindlicher gegenüber äußeren Störeinflüssen ist und eine erhöhte Betriebssicherheit auch unter extremen Betriebsbedingungen gewährleistet, beispielsweise bei Erschütterungen, Vibrationen, Temperaturschwankungen und dergleichen.

Die Montage wird konkret dadurch erleichtert, dass durch die Positioniermittel einfach eine eindeutig definierte Position und Orientierung der Leiterplatte innerhalb des Sensorgehäuses, d.h. in dessen Innenraum, vorgegeben werden kann, bevor die Vergussmasse eingefüllt wird, bevorzugt ein Kunstharz. Als Vergussmasse wird ein Vergussharz, beispielsweise ein Epoxydharz, eingesetzt, welches als Harz-Härter-System in flüssiger Form in das Sensorgehäuse eingegossen wird, und nach dem Aushärten einen festen Block bildet, der das Sensorgehäuse zumindest teilweise, bevorzugt überwiegend ausfüllt, zumindest im Bereich der Positioniermittel.

Die Leiterplatte und die Positioniermittel des Sensorgehäuses und der Leiterplatte, die sich im Positioniereingriff befinden, werden zumindest abschnittweise, bevorzugt vollständig beim Einfüllen von dem flüssigen Vergussharz umflossen und eingeschlossen, und sind nach dem Aushärten in den durch die ausgehärtete Vergussmasse gebildeten festen Block eingebettet.

Dadurch ist die Leiterplatte in ihrer definierten räumlichen Positionierung und Orientierung im Sensorgehäuse, die vor dem Einfüllen des Vergussharzes vorgegeben wurde, form- und stoffschlüssig, fest und unlösbar festgelegt. Dadurch, dass die Vergussmasse die Wandungen des Sensorgehäuses, insbesondere die Positioniermittel aufweisenden Wandungen, kontaktiert, ist der durch die ausgehärtete Vergussmasse gebildete feste Block auch zumindest stoffschlüssig, bevorzugt auch formschlüssig im Innenraum mit dem Sensorgehäuse verbunden. Dadurch sind die in die Vergussmasse eingebetteten Leiterplatten und der Magnetsensor in dem Sensorgehäuse definiert positioniert und fixiert.

Bevorzugt ist auch der auf der Leiterplatte angebrachte Magnetsensor in die Vergussmasse eingebettet, und damit unlösbar und positionsgenau mit der Leiterplatte verbunden. Dadurch ist jegliche unerwünschte Veränderung der Position des Magnetsensors relativ zum Sensorgehäuse praktisch ausgeschlossen.

Es kann mit Vorteil vorgesehen sein, dass die Positioniermittel Formschlusselemente und/oder Kraftschlusselemente und/oder elastische Spannelemente aufweisen. Als Formschlusselemente können beispielsweise miteinander in Eingriff bringbare Vorsprünge, Schienen, Zapfen, Nuten, Öffnungen, Vertiefungen oder dergleichen vorgesehen sein, die aneinander angepasst sind, so dass sie in einer Einführrichtung montiert werden können und dann in mindestens einer anderen Richtung formschlüssig miteinander verbunden sind. Kraftschlussverbindungen können beispielsweise Klemmelemente aufweisen, zwischen denen die Leiterplatte reibschlüssig gehalten wird. Es können weiterhin elastische Spannelemente vorgesehen sein, die beispielsweise beim Montieren der Leiterplatte federnd auseinandergebogen werden und eine elastische Haltekraft auf die Leiterplatte ausüben. Die Spannelemente können auch Rastmittel oder dergleichen aufweisen, in welche die Leiterplatte formschlüssig einrasten oder einschnappen kann.

In einer vorteilhaften Ausführung kann die Leiterplatte selbst, d.h. die Grundplatte der Leiterplatte, auf der die Leiterbahnen und die elektrischen Bauelemente wie der Magnetsensor angebracht sind, direkt in den Positioniermitteln des Sensorgehäuses positioniert und fixiert werden. Die können beispielsweise in dem Innenraum des Sensorgehäuses angeordnete Schienen, Nuten oder dergleichen aufweisen, in welche die plattenförmige Grundplatte eingeschoben wird. Eine derartige Ausführung kann mit geringem Aufwand realisiert werden, ermöglicht eine einfache Montage und eine hohe Positioniergenauigkeit.

Das Sensorgehäuse kann bevorzugt ein Kunststoff-Spritzgussteil aufweisen. Es kann vorteilhaft vollständig oder teilweise aus einem thermoplastischen Polymer ausgebildet sein. Bevorzugt können die Positioniermittel einstückig in das Sensorgehäuse eingeformt sein, beispielsweise als Öffnungen, Vertiefungen, Vorsprünge, Zapfen, Rastnasen oder dergleichen, die beim Spritzgießen ausgebildet werden können. Dies ermöglicht eine rationelle Fertigung und eine hohe Positioniergenauigkeit. Vorteilhaft ist diesbezüglich auch, dass mit den Flussleitern zusammenwirkende Ausrichtmittel ebenfalls einstückig in das Kunststoff-Spritzgussteil eingeformt sein können. Dadurch kann die im Stand der Technik ungünstige Verkettung von Maßtoleranzen durch Zusammensetzen unterschiedlicher Gehäuseteile vermieden werden.

In einer vorteilhaften Weiterbildung ist es möglich, dass die Leiterplatte Umformmittel aufweist, die ausgebildet sind zur plastischen oder elastischen Umformung von Positioniermitteln. Die Umformmittel sind derart ausgebildet und an der Leiterplatte angeordnet, dass sie eine Art Umformwerkzeug bilden, durch welches das Sensorgehäuse im Bereich der Positioniermittel beim Einsetzen der Leiterplatte umformend bearbeitet wird. Die Umformmittel können beispielsweise mindestens eine Schneidkante aufweisen, welche ein Positioniermittel des Sensorgehäuses beim Einschieben der Leiterplatte ähnlich wie ein Hobel oder Schaber spanend bearbeitet. Dadurch graben sich die Umformmittel derart in das Material des Sensorgehäuses ein, dass eine optimal an die Form und die Abmessungen der Leiterplatte angepasste Formschlussaufnahme erzeugt wird. Mittels der Umformmittel kann die Leiterplatte dadurch praktisch selbstschneidend ausgebildet sein, so dass sie sich - ähnlich wie bei einer selbstschneidenden Schraube - bei der Montage selbsttätig ein passgenau optimiertes Positioniermittel erzeugt. Die Umformmittel können definierte Schneidkanten, und auch undefinierte Schneidkanten wie Schleifmittel, und zusätzlich oder alternativ andere Mittel zur plastischen Verformung aufweisen, wie Dorne, Keile oder dergleichen, welche beim Einsetzen eine plastische und/oder elastische Verformung erzeugen. Eine beim Einsetzen erzeugte elastische Verformung kann beispielsweise zum Einklemmen der Leiterplatte genutzt werden. Die Umformmittel ermöglichen durch das Erzeugen von Positioniermitteln in einem Arbeitsgang beim Einsetzen der Leiterplatte eine vorteilhafte Reduzierung des Fertigungsaufwands.

Vorteilhaft kann eine Kombination aus plastischer und elastischer Verformung durch die Umformmittel beim Einsetzen sein. Dabei wird beispielsweise ein Positioniermittel spanend oder nichtspanend erzeugt, beispielsweise eine Nut, Öffnung oder Vertiefung eingeschnitten, ausgehoben und/oder aufgeweitet werden, und durch die elastische Rückfederung des Materials des Sensorgehäuses entgegen den Umformkräften wird die Leiterplatte in dem erzeugten Positioniermittel eingeklemmt. Dadurch wird bei geringem Fertigungsaufwand eine sichere Positionierung der Leiterplatte ermöglicht.

Es kann mit Vorteil vorgesehen sein, dass die Leiterplatte zumindest abschnittweise aus einem härteren Material als das Sensorgehäuse ausgebildet ist. Das härtere Material kann die Positioniermittel beim Einsetzen der Leiterplatte die Positioniermittel umformen, und bildet ein Umformmittel aus zur plastischen und/oder elastischen Umformung. Die Leiterplatte kann beispielsweise eine Grundplatte aus einem härteren Material haben, beispielsweise einem glasfaserverstärktem Kunststoff, die sich spanabhebend oder spanlos in den Kunststoff des Sensorgehäuses einformen kann, beispielsweise spanend mittels einer angeformten Schneidkante.

Es ist möglich, dass ein mit der Leiterplatte zusammenwirkendes Sicherungselement zumindest teilweise in die Vergussmasse eingebettet ist. Die Leiterplatte wird in einer Einsetzrichtung in die Positioniermittel eingesetzt. Ein Sicherungselement kann beispielsweise ein Deckelelement umfassen, welches nach dem Einsetzen der Leiterplatte in die Positioniermittel derart in das Sensorgehäuse eingebracht wird, so dass es entgegen der Einsetzrichtung gegen die Leiterplatte gerichtet ist, und Abstand zur Leiterplatte hat oder diese kontaktiert. Dadurch verhindert es, dass sich die Leiterplatte relativ zu den Positioniermitteln bewegt, und sichert die Positionierung. Dadurch können Fehlpositionierungen bei der Einbettung in die Vergussmasse verhindert werden, wodurch die Genauigkeit der Positionierung in vorteilhafter Weise erhöht wird.

Bevorzugt ist vorgesehen, dass die Leiterplatte zwischen zwei Flussleitern angeordnet ist. dadurch ist der auf der Leiterplatte angeordnete Magnetsensor derart relativ zu den Flussleitern positioniert, dass er daran magnetisch angekoppelt ist. Damit ist gemeint, dass die Flussleiter mit dem Magnetsensor derart magnetisch wirkverbunden sind, dass der magnetische Fluss effizient von den Flussleitern auf den Magnetsensor übertragen wird. Hierzu können die Flussleiter Ankopplungsabschnitte aufweisen, die beispielsweise in mechanischen Kontakt mit dem Magnetsensor gebracht werden können.

Eine vorteilhafte Ausführung kann dadurch realisiert sein, dass das Sensorgehäuse als offener Kasten ausgebildet ist, der oben eine offene Oberseite, unten einen Boden und dazwischen angeordnete Seitenwände aufweist, wobei die Positioniermittel Führungselemente aufweisen, wobei die Führungselemente sich an den Seitenwänden in einer Einführrichtung von oben nach unten erstrecken, und die Leiterplatte in Einführrichtung in den Führungselementen geführt ist. Die Montage der Leiterplatte kann dadurch einfach in vorteilhafter Weise dadurch erfolgen, dass die Leiterplatte durch die offene Oberseite nach unten in die Führungselemente eingeführt wird. Bevorzugt können die Führungselemente als von oben nach unten gerichtete Nuten an gegenüberliegenden Innenseiten des kastenförmigen Sensorgehäuses ausgebildet sein, zwischen denen die Leiterplatte in Einsetzrichtung zur Montage von oben nach unten eingeschoben werden kann.

Ein Sicherungselement kann an dem Sensorgehäuse fixiert sein, welches die Leiterplatte entgegen der Einführrichtung blockiert. Beispielsweise kann ein Sicherungselement oberhalb der vorgenannten Führungselemente angebracht sein, um ein Herausbewegen der Leiterplatte entgegen der Einführrichtung zu blockieren. Dadurch wird in vorteilhafter Weise eine Fehlpositionierung beim Einfüllen der Vergussmasse vermieden. Nach dem Aushärten der Vergussmasse sind die Leiterplatte, die Positioniermittel und das Sicherungselement relativ zueinander fest und unlösbar in dem durch die Vergussmasse gebildeten festen Block positioniert und form- und/oder stoffschlüssig fixiert.

Bevorzugt kann vorgesehen sein, dass zwei Flussleiter durch Durchgangsöffnungen durch den Boden hindurchgeführt sind, wobei die Leiterplatte zwischen den Flussleitern angeordnet ist. Dadurch kann die Leiterplatte beim Einsetzen in Einsetzrichtung von oben nach unten zwischen die Flussleiter eingebracht werden, wobei diese relativ zum Magnetsensor positionier werden und an diesen angekoppelt werden zur Bildung einer magnetischen Wirkverbindung. Die Anbringung und Positionierung der Flussleiter wir weiter unten noch näher erläutert.

Es kann vorgesehen sein, dass die Sensorvorrichtung ein mit der Leiterplatte wirkverbundenes, aus dem Sensorgehäuse herausführendes Anschlusskabel aufweist, wobei das mit der Leiterplatte gekoppelte Anschlusskabel durch eine elektrisch leitende Verbindung mit der Leiterplatte verbunden ist. Als elektrisch leitende Verbindung kann beispielsweise eine Lötverbindung erzeugt werden, über welche das Anschlusskabel mit den zum Magnetsensor führenden elektrischen Leiterbahnen der Leiterplatte angeschlossen ist. Das Anschlusskabel kann mit einer elektrischen Steuereinheit des Lenksystems verbunden sein. Bevorzugt kann die elektrische Verbindung ebenfalls in die Vergussmasse eingebettet sein, wodurch eine robuste und gegen Störungen unempfindliche Anordnung erzeugt wird.

Das Sensorgehäuse kann fest mit der Sensorvorrichtung verbunden sein, wobei die Flussleiter mit den Statorelementen verbunden sind, beispielsweise ebenfalls fest verbunden. Es ist ebenfalls denkbar und möglich, dass das Sensorgehäuse lösbar mit der Sensorvorrichtung verbunden ist, wobei die magnetische Wirkverbindung zwischen den nach außen aus dem Sensorgehäuse vorstehenden äußeren Abschnitten (Teilabschnitten) der Flussleiter und den Statorelementen ebenfalls lösbar ist. Das Sensorgehäuse kann beispielsweise zur Verbindung lösbar, bevorzugt formschlüssig in eine korrespondierende Aufnahme der Sensorvorrichtung eingesetzt werden, zur magnetischen Ankopplung an die Statorelemente.

Es ist vorteilhaft, dass eine Sensorvorrichtung, welche einzelne oder Kombinationen der vorangehend beschriebenen Merkmale aufweist, einen Drehmomentsensor und/oder einen Drehwinkelsensor umfasst. Ein Drehmomentsensor kann dadurch realisiert werden, dass an einem ersten Wellenteil ein Magnet angebracht ist, und an einem mit dem ersten Wellenteil über einen torsionselastischen Drehstab verbundenen zweiten Wellenteil die Statorelemente. Die Statorelemente können den Magneten koaxial umgeben. Bei einem Drehwinkelsensor ist ein Magnet an einem drehbaren Wellenteil angebracht, und die Statorelemente relativ dazu bezüglich der Drehung feststehend. Ein Drehmoment- und ein Drehwinkelsensor können auch als integrierte Einheit ausgebildet sein. In jedem Fall ermöglicht die Erfindung eine robustere Ausgestaltung und eine verbesserte Messgenauigkeit und Betriebssicherheit über die gesamte Betriebsdauer.

Bevorzugt kann ein Lenksystem für ein Kraftfahrzeug eine erfindungsgemäße Sensorvorrichtung aufweisen. Daraus resultiert eine vorteilhaft höhere Betriebssicherheit.

Ausserhalb des Schutzbereiches der Ansprüche umfasst die Erfindung weiterhin ein Verfahren zur Herstellung einer Sensorvorrichtung, bei dem in einem Sensorgehäuse ein Magnetsensor magnetisch an Flussleiter angekoppelt wird, die magnetisch an Statorelemente ankoppelbar sind, wobei der Magnetsensor auf einer Leiterplatte angebracht ist, die in dem Sensorgehäuse zwischen den Flussleitern fixiert ist, umfassend die Schritte:
a) Bereitstellen eines Positioniermittel aufweisenden Sensorgehäuses,
b) Einsetzen der Flussleiter in das Sensorgehäuse,
c) Einsetzen der Leiterplatte in die Positioniermittel,
d) Einfüllen eines flüssigen, aushärtbaren Vergussharzes in das Sensorgehäuse,
e) Aushärten des Vergussharzes.

Bezüglich der nachfolgenden Erläuterung des Verfahrens wird in vollem Umfang Bezug genommen auf die oben im Zusammenhang mit dem Aufbau der Sensorvorrichtung gemachten Ausführungen.

Das Sensorgehäuse ist bevorzugt kastenförmig oder becherförmig ausgebildet, wobei der Boden durch eine definitionsgemäß untenliegende Bodenwandung gebildet wird, von dem sich Seitenwandungen nach oben erstrecken, und die Oberseite nach oben offen ist. Der Boden und die Seitenwandungen umschließen den Innenraum des Sensorgehäuses. Im Innenraum des Sensorgehäuses sind die erfindungsgemäßen Positioniermittel für die Leiterplatte ausgebildet.

Bevorzugt kann das Sensorgehäuse als Kunststoff-Spritzgussteil aus einem thermoplastischen Polymer bereitgestellt werden, bevorzugt einstückig ausgebildet. Die Positioniermittel können dabei einstückig eingeformt sein.

Beim Einsetzen der Leiterplatte können die Positioniermittel elastisch und/oder plastisch verformt werden. Hierzu können - wie oben für die Sensorvorrichtung beschrieben - an der Leiterplatte Umformmittel vorgesehen sein, die sich beim Einsetzen spanabhebend oder spanlos quetschend in das Material des Sensorgehäuses plastisch und/oder elastisch einformen.

Bevorzugt können die Positioniermittel beispielsweise von oben nach unten verlaufende Nuten oder Vertiefungen an gegenüberliegenden Innenseiten aufweisen. Die Leiterplatte kann dann zur Montage einfach durch die offene Oberseite in Einführrichtung von oben nach unten im Schritt (c) in die Positioniermittel eingeschoben werden.

Bevorzugt weisen die Positioniermittel Anschlagelemente auf, gegen die die Leiterplatte beim Einsetzen in mechanischen Kontakt gebracht wird, mit anderen Worten dagegen anschlägt. Dadurch wird ein Endanschlag realisiert, der beim Anschlag für eine genaue und eindeutige Positionierung der Leiterplatte sorgt. Dadurch wird die Montage vereinfacht. Anschlagelemente können auch durch den Boden gebildet oder dort angeordnet sein.

Die Flussleiter können in einem Schritt vor oder nach dem Einsetzen der Leiterplatte in dem Sensorgehäuse positioniert und fixiert sein. Durch das Einsetzen der Leiterplatte wird der darauf angebrachte Magnetsensor an die Flussleiter magnetisch angekoppelt und eine magnetische Wirkverbindung zur Übertragung des Magnetflusses erzeugt.

Es kann optional ein Sicherungselement in dem Sensorgehäuse angeordnet werden, welches die Leiterplatte in ihrer Position in den Positioniermitteln sichert, wie dies oben für die Sensorvorrichtung beschrieben ist.

Im nächsten Schritt (d) erfolgt das Einfüllen eines flüssigen, aushärtbaren Vergussharzes in das Sensorgehäuse. Dies kann bevorzugt durch Eingießen in die offene Oberseite erfolgen, wobei der Boden unten liegt.

Als Vergussmasse wird ein Harz-Härter-System, bevorzugt auf Basis von Epoxydharz oder dergleichen, in flüssiger Form bereitgestellt und in den Innenraum des Sensorgehäuses eingegossen. Bevorzugt wird das Sensorgehäuse dabei so ausgerichtet, dass der Boden in Schwerkraftrichtung unten liegt, und das flüssige Harz durch die offene Oberseite eingefüllt werden kann. Dadurch umfließt das flüssige Harz die Leiterplatte und die Positioniermittel.

Bevorzugt werden auch zumindest Teilabschnitte der Flussleiter und, soweit vorhanden, ein Sicherungselement in die Vergussmasse eingebettet.

Das zunächst flüssige Kunstharz steht an der Leiterplatte, den Positioniermitteln und den Flussleitern an. Das zunächst flüssige Harz umfließt aufgrund seiner gegebenen initialen Viskosität und Oberflächenspannung vorzugsweise allein unter dem Einfluss der Schwerkraft die darin eingebetteten Elemente und härtet im nachfolgenden Schritt (e) mit fortschreitender Zeit durch Vernetzung aus, bis es zu einem festen, den Innenraum zumindest teilweise ausfüllenden Block erstarrt.

Ein Vorteil des erfindungsgemäßen Verfahrens ist, dass die in den Positioniermitteln fixierte Leiterplatte durch die fluiddynamischen Kräfte beim Einfüllen des Harzes mit hoher Genauigkeit in Position bleibt, insbesondere auch relativ zu den Flussleitern. Mit anderen Worten wird im bezüglich der magnetischen Wirkverbindung optimierte Positionierung nicht gestört oder beeinträchtigt. Dies ist ein wesentlicher Vorteil gegenüber Spritzgussverfahren, bei denen die Kunststoffschmelze mit hohem Druck und hoher Geschwindigkeit eingespritzt wird, wodurch die Gefahr von unerwünschten Relativbewegungen auftritt.

Vorzugsweise erfolgt das Einfüllen oder Eingießen des Vergussharzes in einem Niederdruckverfahren. Bevorzugt kann das Einfüllen des flüssigen Harzes unter Atmosphärendruck durch Schwerkraft in das kasten- oder becherförmige Sensorgehäuse erfolgen. Dabei wirken nur relativ geringe fluiddynamische Kräfte, so dass die Leiterplatte und die Flussleiter nicht oder zumindest nicht merklich aus ihrer vorgegebenen Position bewegt werden.

Nach dem Aushärten des Vergussharzes kann ein magnetisches Ankoppeln der Flussleiter, die aus dem mit der Vergussmasse gefüllten Sensorgehäuse herausragen, an Statorelemente erfolgen, die im Magnetfeld eines um eine Achse rotierbaren Magneten angeordnet sind. In den äußeren, nach außen durch den Boden hinausragenden Teilabschnitten weisen die Flussleiter bevorzugt äußere Ankopplungsabschnitte auf, die zur Erzeugung eines effektiven magnetischen Übergangs mit den Statorelementen magnetisch wirkverbindbar sind, d.h. an diese ankoppelbar sind. Ein Vorteil der Erfindung ist, dass die Leiterplatte und bevorzugt auch die Flussleiter nach dem Aushärten der Vergussmasse räumlich fest relativ zum Sensorgehäuse fixiert und definiert positioniert sind. Dadurch kann auch eine räumlich genau definierte Verbindung an die Statorelemente einfacher erzeugt werden, wodurch die Montage vereinfacht und die Betriebssicherheit erhöht wird.

Bei einer Sensorvorrichtung für ein Kraftfahrzeug-Lenksystem, umfassend ein Sensorgehäuse, in dem ein elektrischer Magnetsensor angeordnet und an magnetische Flussleiter angekoppelt ist, wobei die Flussleiter mit Statorelementen verbindbar sind, wobei die Statorelemente im Magnetfeld eines um eine Achse rotierbaren Magneten positionierbar sind,
wobei die Flussleiter und der Magnetsensor in dem Sensorgehäuse fixiert sind, kann weiterhin vorgesehen sein, dass das Sensorgehäuse mit den Flussleitern korrespondierende Ausrichtmittel aufweist zur definierten Ausrichtung der Flussleiter in dem Sensorgehäuse, und das Sensorgehäuse mit einer Vergussmasse gefüllt ist, in welcher die Flussleiter und die Ausrichtmittel zumindest teilweise eingebettet und unlösbar miteinander fixiert sind.

Die Flussleiter und der Magnetsensor sind innerhalb des Sensorgehäuses angeordnet. Die Flussleiter sind im Innenraum des Sensorgehäuses an den Magnetsensor angekoppelt, d.h. wirkverbunden zur Erzeugung eines optimierten magnetischen Übergangs.

Dabei sind die Flussleiter unmittelbar in Ausrichtmitteln des Sensorgehäuses positionsgenau fixiert. Mit anderen Worten können die Flussleiter direkt im Sensorgehäuse orientiert und positioniert werden, und erstrecken sich nicht wie im Stand der Technik frei und ungestützt im Innenraum des Sensorgehäuses. Der Magnetsensor kann ebenfalls bevorzugt unmittelbar mit dem Sensorgehäuse verbunden sein, beispielsweise durch Positioniermittel.

Durch die Ausrichtmittel kann der Vorteil realisiert werden, dass die Genauigkeit der Positionierung und Ausrichtung der Flussleiter im Wesentlichen nur durch die Maßtoleranzen der Ausrichtmittel bestimmt wird, die diesbezüglich mit geringem Aufwand optimiert werden können.

Weiterhin sind gemäß der Erfindung die Flussleiter und die Ausrichtmittel erfindungsgemäß von einer festen Vergussmasse umschlossen, die das Sensorgehäuse zumindest teilweise ausfüllt, so dass eine eindeutig definierte, stoff- und formschlüssige Fixierung und Ausrichtung der Flussleiter relativ zu den Ausrichtmitteln und damit auch im Innenraum relativ zum Sensorgehäuse erzeugt wird.

Ein Vorteil der Erfindung ist, dass eine hohe Genauigkeit der Ausrichtung und Positionierung bei der Montage mit geringerem Aufwand ermöglicht wird, da lediglich die Flussleiter und die korrespondierenden Ausrichtmittel zusammengefügt werden müssen. Die verbesserte Montage ermöglicht eine höhere Messgenauigkeit der Sensorvorrichtung bei geringerem Fertigungsaufwand, insbesondere bei hohen Stückzahlen in der Serienfertigung. Die Einbettung in die Vergussmasse kann ebenfalls mit geringem Aufwand realisiert werden, und sorgt für eine besonders robuste Anordnung, die unempfindlicher gegenüber äußeren Störeinflüssen ist und eine erhöhte Betriebssicherheit auch unter extremen Betriebsbedingungen gewährleistet, beispielsweise bei Erschütterungen, Vibrationen, Temperaturschwankungen und dergleichen.

Die Montage wird konkret dadurch erleichtert, dass durch die Ausrichtmittel einfach eine eindeutig definierte Position und Orientierung der Flussleiter innerhalb des Sensorgehäuses, d.h. in dessen Innenraum, vorgegeben werden kann, bevor die Vergussmasse eingefüllt wird, bevorzugt ein Kunstharz. Als Vergussmasse wird ein Vergussharz, beispielsweise ein Epoxydharz, eingesetzt, welches als Harz-Härter-System in flüssiger Form in das Sensorgehäuse eingegossen wird, und nach dem Aushärten einen festen Block bildet, der das Sensorgehäuse zumindest teilweise, bevorzugt überwiegend ausfüllt, zumindest im Bereich der Flussleiter und der Ausrichtmittel.

Die sich im Sensorgehäuse befindenden Abschnitte der Flussleiter und die Ausrichtmittel, die sich im Ausrichteingriff befinden, werden zumindest abschnittweise, bevorzugt vollständig beim Einfüllen von dem flüssigen Vergussharz umflossen und eingeschlossen, und sind nach dem Aushärten in den durch die ausgehärtete Vergussmasse gebildeten festen Block eingebettet. Dadurch sind die Flussleiter in ihrer definierten räumlichen Ausrichtung und Positionierung im Sensorgehäuse, die vor dem Einfüllen des Vergussharzes vorgegeben wurde, form- und/oder stoffschlüssig, fest und unlösbar festgelegt.

Dadurch, dass die Vergussmasse die Wandungen des Sensorgehäuses, insbesondere die Ausrichtmittel aufweisenden Wandungen, kontaktiert, ist der durch die ausgehärtete Vergussmasse gebildete feste Block auch zumindest stoffschlüssig, bevorzugt auch formschlüssig im Innenraum mit dem Sensorgehäuse verbunden. Dadurch sind die in die Vergussmasse eingebetteten Flussleiter in dem Sensorgehäuse definiert positioniert und fixiert.

Bevorzugt ist zusammen mit den Flussleitern auch der Magnetsensor in die Vergussmasse eingebettet, und damit unlösbar und positionsgenau mit den Flussleitern verbunden. Dadurch ist jegliche unerwünschte Veränderung der Position der Flussleiter relativ zum Magnetsensor und relativ zum Sensorgehäuse praktisch ausgeschlossen.

Es kann mit Vorteil vorgesehen sein, dass die Ausrichtmittel Formschlusselemente und/oder Kraftschlusselemente und/oder elastische Spannelemente aufweisen. Als Formschlusselemente können beispielsweise mit den Flussleitern in Eingriff bringbare Vorsprünge, Schienen, Zapfen, Nuten, Öffnungen, Vertiefungen oder dergleichen vorgesehen sein, die aneinander angepasst sind, so dass die Flussleiter in einer Einführrichtung in den Ausrichtmitteln montiert werden können und dann in mindestens einer anderen Richtung formschlüssig damit verbunden sind. Kraftschlussverbindungen können beispielsweise Klemmelemente aufweisen, zwischen denen die Flussleiter reibschlüssig gehalten werden. Es können weiterhin elastische Spannelemente vorgesehen sein, die beispielsweise beim Montieren der Flussleiter federnd auseinandergebogen werden und eine elastische Haltekraft auf die Flussleiter ausüben. Die Spannelemente können auch Rastmittel oder dergleichen aufweisen, in welche die Flussleiter formschlüssig einrasten oder einschnappen können.

Die Ausrichtelemente können beispielsweise in dem Innenraum des Sensorgehäuses angeordnete Schienen, Nuten oder dergleichen aufweisen, in welche die Abschnitte der Flussleiter eingeschoben werden. Eine derartige Ausführung kann mit geringem Aufwand realisiert werden, ermöglicht eine einfache Montage und eine hohe Positioniergenauigkeit.

Die Flussleiter können bevorzugt als Blechformteile ausgebildet sein, beispielsweise aus Eisen- oder Stahlblech mit definierten magnetischen Eigenschaften. Die mechanische Fertigung kann rationell durch Kaltumformung wie Stanzen, Biegen, Pressen und dergleichen erfolgen. Gegebenenfalls können die fertig geformten Blechformteile einer thermischen Behandlung und zusätzlich oder alternativ einer magnetischen Behandlung unterzogen werden, um die magnetischen Eigenschaften zu homogenisieren bzw. zu optimieren. Erfindungsgemäß sind die Blechformteile unmittelbar mit den korrespondierenden Ausrichtmitteln verbunden, wodurch eine vorteilhaft hohe Montagegenauigkeit ermöglicht wird.

Das Sensorgehäuse kann bevorzugt ein Kunststoff-Spritzgussteil aufweisen. Es kann vorteilhaft vollständig oder teilweise aus einem thermoplastischen Polymer ausgebildet sein. Bevorzugt können die Ausrichtmittel einstückig in das Sensorgehäuse eingeformt sein, beispielsweise als Öffnungen, Vertiefungen, Vorsprünge, Zapfen, Rastnasen, Halteprofile und/oder Durchgangsöffnungen oder dergleichen, die beim Spritzgießen ausgebildet werden können. Dies ermöglicht eine rationelle Fertigung und eine hohe Positioniergenauigkeit. Vorteilhaft ist diesbezüglich auch, dass mit dem Magnetsensor zusammenwirkende Positioniermittel ebenfalls einstückig in das Kunststoff-Spritzgussteil eingeformt sein können. Dadurch kann die im Stand der Technik ungünstige Verkettung von Maßtoleranzen durch Zusammensetzen unterschiedlicher Gehäuseteile vermieden werden.

Es kann vorteilhaft sein, dass die Flussleiter und die Ausrichtmittel korrespondierende Anschlagelemente aufweisen. Derartige Anschlagelemente können beispielsweise vom Flussleiter quer zur Einsetzrichtung vorstehende Vorsprünge, Absätze oder dergleichen umfassen, die beim Einsetzen gegen die Ausrichtmittel anschlagen und das Einsetzen positionsgenau begrenzen. Dadurch wird die Montage der Flussleiter vereinfacht.

Es ist möglich, dass ein mit den Flussleitern zusammenwirkendes Sicherungselement zumindest teilweise in die Vergussmasse eingebettet ist. Die Flussleiter werden in einer Einsetzrichtung in die Ausrichtmittel eingesetzt. Ein Sicherungselement kann beispielsweise ein Deckelelement umfassen, welches nach dem Einsetzen der Flussleiter in die Ausrichtmittel derart in das Sensorgehäuse eingebracht wird, dass es entgegen der Einsetzrichtung gegen die Flussleiter gerichtet ist, und Abstand zur diesen hat oder diese kontaktiert. Dadurch verhindert es, dass sich die Flussleiter relativ zu den Ausrichtmitteln bewegen können, und sichert dadurch deren Ausrichtung und Positionierung. Dadurch können Fehlpositionierungen bei der Einbettung in die Vergussmasse verhindert werden, wodurch die Genauigkeit der Ausrichtung in vorteilhafter Weise erhöht wird.

Zur optimierten Verbindung mit dem Magnetsensor und/oder den Statorelementen können die Flussleiter Ankopplungsabschnitte aufweisen. Die Ankopplungsabschnitte können bezüglich ihrer Form und Abmessungen an den Bereich eines Statorelements angepasst sein, in dem der zu messende Magnetfluss abgegriffen werden soll, und bevorzugt zusätzlich oder alternativ an den Bereich des Magnetsensors, in den der zu messende Magnetfluss eingeleitet wird. Durch die angepasste Form und Fläche kann der für die Messung relevante Magnetfluss in vorteilhafter Weise möglichst verlustarm über die Flussleiter von den Statorelementen zum Magnetsensor übertragen werden. Dank der Erfindung sind die mit dem Magnetsensor magnetisch wirkverbundenen Ankopplungsabschnitte im Innenraum des Sensorgehäuses in die Vergussmasse eingebettet und sicher gegen Störeinflüsse geschützt. Erfindungsgemäß können die Ankopplungsabschnitte beim Einsetzen der Flussleiter ohne zusätzliche Justierung mit hoher Genauigkeit relativ zum Magnetsensor angeordnet werden, wodurch in vorteilhafter Weise der Fertigungsaufwand reduziert werden kann.

Bevorzugt ist vorgesehen, dass der Magnetsensor zwischen zwei Flussleitern angeordnet ist. Dadurch ist der Magnetsensor derart relativ zu den Flussleitern positioniert, dass er daran magnetisch angekoppelt ist. Damit ist gemeint, dass die Flussleiter mit dem Magnetsensor derart magnetisch wirkverbunden sind, dass der Magnetfluss effizient von den Flussleitern auf den Magnetsensor übertragen wird. Hierzu können die Flussleiter Ankopplungsabschnitte aufweisen, die beispielsweise in mechanischen Kontakt mit dem Magnetsensor gebracht werden können.

Eine vorteilhafte Ausführung kann dadurch realisiert sein, dass das Sensorgehäuse als offener Kasten ausgebildet ist, der oben eine offene Oberseite und unten einen Boden aufweist, wobei die Ausrichtmittel Führungselemente aufweisen, wobei die Führungselemente sich in einer Einführrichtung von oben nach unten erstrecken, und die Flussleiter in Einführrichtung in den Führungselementen geführt sind. Die Montage der Flussleiter kann in vorteilhafter Weise dadurch erfolgen, dass die Flussleiter durch die offene Oberseite nach unten in die Ausricht- bzw. Führungselemente eingeführt werden. Bevorzugt können die Führungselemente von oben nach unten gerichtete Nuten an gegenüberliegenden Innenseiten des kastenförmigen Sensorgehäuses ausgebildet sein, zwischen denen die Flussleiter in Einsetzrichtung zur Montage von oben nach unten eingeschoben werden können.

Es kann mit Vorteil vorgesehen sein, dass zwei Flussleiter in einer Einführrichtung durch Durchgangsöffnungen in dem Boden hindurchgeführt sind und in Führungselementen an zwischen Oberseite und Boden erstreckten Seitenwänden in Einführrichtung geführt sind, wobei der Magnetsensor zwischen den Flussleitern angeordnet ist. Dabei können die Durchgangsöffnungen und die Führungselemente, beispielsweise Nuten oder dergleichen, als Ausrichtelemente dienen. Dadurch sind in vorteilhafter Weise die innerhalb des Sensorgehäuses verlaufenden inneren Teilabschnitte der Flussleiter relativ zum Magnetsensor ausgerichtet, und auch die aus dem Sensorgehäuse nach außen herausragenden äußeren Teilabschnitte, die mit den Statorelementen magnetisch wirkverbunden werden.

Ein Sicherungselement kann an dem Sensorgehäuse fixiert sein, welches die Flussleiter entgegen der Einführrichtung blockiert. Beispielsweise kann ein Sicherungselement oberhalb der vorgenannten Führungselemente angebracht sein, um ein Herausbewegen der Flussleiter entgegen der Einführrichtung zu blockieren. Dadurch wird in vorteilhafter Weise eine Fehlpositionierung beim Einfüllen der Vergussmasse vermieden. Nach dem Aushärten der Vergussmasse sind die Flussleiter, die Ausrichtelemente und das Sicherungselement relativ zueinander fest und unlösbar in dem durch die Vergussmasse gebildeten festen Block positioniert und form- und/oder stoffschlüssig fixiert.

Eine vorteilhafte Ausführung kann vorsehen, dass der Magnetsensor auf einer Leiterplatte angebracht ist. Die Leiterplatte, die gleichbedeutend auch als Platine oder PCB (printed circuit board) bezeichnet wird, dient als mechanischer Träger für das eigentliche Sensorelement, und weist mit dem Sensorelement verbundene elektrische Leiterbahnen zum elektrischen Anschluss auf. Die Leiterplatte kann bevorzugt zur definierten Fixierung und Positionierung im Innenraum des Sensorgehäuses ausgestaltet sein, so dass der darauf angebrachte Magnetsensor ebenfalls im Sensorgehäuse definiert orientiert und positioniert ist, insbesondere relativ zu den Durchgangsöffnungen und den darin eingesetzten Flussleitern. Hierzu können die Leiterplatte und das Sensorgehäuse miteinander korrespondierende, zur Verbindung zusammenwirkende Fixier- und/oder Positioniermittel aufweisen, beispielsweise Führungs-, Verbindungs- und/oder Befestigungselemente, die bevorzugt formschlüssig und/oder kraftschlüssig zusammenwirken können.

Vorzugsweise kann die Leiterplatte in die erfindungsgemäß in das Sensorgehäuse eingefüllte Vergussmasse eingebettet sein, zur formschlüssigen Fixierung in dem Sensorgehäuse, und ebenfalls zur Fixierung des Magnetsensors auf der Leiterplatte.

Es kann vorgesehen sein, dass die Sensorvorrichtung ein mit dem Magnetsensor wirkverbundenes, aus dem Sensorgehäuse herausführendes Anschlusskabel aufweist, wobei das Anschlusskabel durch eine elektrisch leitende Verbindung mit dem Magnetsensor verbunden ist. Als elektrisch leitende Verbindung kann beispielsweise eine Lötverbindung erzeugt werden, über welche das Anschlusskabel mit den zum Magnetsensor führenden elektrischen Leiterbahnen einer Leiterplatte angeschlossen ist. Das Anschlusskabel kann mit einer elektrischen Steuereinheit des Lenksystems verbunden sein. Bevorzugt kann die elektrische Verbindung ebenfalls in die Vergussmasse eingebettet sein, wodurch eine robuste und gegen Störungen unempfindliche Anordnung erzeugt wird.

Das Sensorgehäuse kann fest mit der Sensorvorrichtung verbunden sein, wobei die Flussleiter mit den Statorelementen verbunden sind, beispielsweise ebenfalls fest verbunden. Es ist ebenfalls denkbar und möglich, dass das Sensorgehäuse lösbar mit der Sensorvorrichtung verbunden ist, wobei die magnetische Wirkverbindung zwischen den nach außen aus dem Sensorgehäuse vorstehenden äußeren Abschnitten (Teilabschnitten) der Flussleiter und den Statorelementen ebenfalls lösbar ist. Das Sensorgehäuse kann beispielsweise zur Verbindung lösbar, bevorzugt formschlüssig in eine korrespondierende Aufnahme der Sensorvorrichtung eingesetzt werden, zur magnetischen Ankopplung an die Statorelemente.

Es ist vorteilhaft, dass eine Sensorvorrichtung, welche einzelne oder Kombinationen der vorangehend beschriebenen Merkmale aufweist, einen Drehmomentsensor und/oder einen Drehwinkelsensor umfasst. Ein Drehmomentsensor kann dadurch realisiert werden, dass an einem ersten Wellenteil ein Magnet, und an einem mit dem ersten Wellenteil über einen torsionselastischen Drehstab verbundenen zweiten Wellenteil die Statorelemente angebracht sind. Die Statorelemente können den Magneten koaxial umgeben. Bei einem Drehwinkelsensor ist ein Magnet an einem drehbaren Wellenteil angebracht, und die Statorelemente relativ dazu bezüglich der Drehung feststehend. Ein Drehmoment- und ein Drehwinkelsensor können auch als integrierte Einheit ausgebildet sein. In jedem Fall ermöglicht die Erfindung eine robustere Ausgestaltung und eine verbesserte Messgenauigkeit und Betriebssicherheit über die gesamte Betriebsdauer.

Bevorzugt kann ein Lenksystem für ein Kraftfahrzeug eine erfindungsgemäße Sensorvorrichtung aufweisen. Daraus resultiert ein geringerer Fertigungsaufwand und eine vorteilhaft höhere Betriebssicherheit.

Ausserhalb des Schutzbereiches der Ansprüche umfasst die Erfindung weiterhin ein Verfahren zur Herstellung eines Sensorvorrichtung, bei dem in einem Sensorgehäuse ein Magnetsensor magnetisch an Flussleiter angekoppelt wird, die magnetisch an im Magnetfeld eines Magneten positionierbare Statorelemente ankoppelbar, d.h. wirkverbunden, sind, wobei der Magnetsensor in dem Sensorgehäuse zwischen den Flussleitern fixiert ist,
umfassend die Schritte:
a) Bereitstellen eines Ausrichtelemente aufweisenden Sensorgehäuses,
b) Einsetzen von Flussleitern in die Ausrichtelemente,
c) Einsetzen des Magnetsensors in das Sensorgehäuse,
d) Einfüllen eines flüssigen, aushärtbaren Vergussharzes in das Sensorgehäuse,
e) Aushärten des Vergussharzes.

Bezüglich der nachfolgenden Erläuterung des Verfahrens wird in vollem Umfang Bezug genommen auf die oben im Zusammenhang mit dem Aufbau der Sensorvorrichtung gemachten Ausführungen.

Das Sensorgehäuse ist bevorzugt kastenförmig oder becherförmig ausgebildet, wobei der Boden durch eine definitionsgemäß unterliegende Bodenwandung gebildet wird, von dem sich Seitenwandungen nach oben erstrecken, und die Oberseite nach oben offen ist. Der Boden und die Seitenwandungen umschließen den Innenraum des Sensorgehäuses. Im Innenraum sind die erfindungsgemäßen Ausrichtmittel für die Flussleiter ausgebildet.

Bevorzugt können die Ausrichtmittel beispielsweise von oben nach unten verlaufende Nuten oder Vertiefungen an gegenüberliegenden Innenseiten aufweisen. Die Flussleiter können dann zur Montage einfach durch die offene Oberseite in Einführrichtung von oben nach unten im Schritt (c) in die Ausrichtmittel eingeschoben werden.

Bevorzugt weisen die Ausrichtmittel Anschlagelemente auf, gegen die die Flussleiter beim Einsetzen in mechanischen Kontakt gebracht werden, mit anderen Worten dagegen anschlagen. Dadurch werden Endanschläge realisiert, die beim Anschlag für eine genaue und eindeutige Ausrichtung und Positionierung der Flussleiter sorgen. Dadurch wird die Montage vereinfacht. Anschlagelemente können auch durch den Gehäuseboden gebildet oder dort angeordnet sein.

Der Magnetsensor kann in einem Schritt vor oder nach dem Einsetzen der Flussleiter in dem Sensorgehäuse positioniert und fixiert sein. Durch das Einsetzen des Magnetsensors, der beispielsweise auf einer Leiterplatte angebracht sein kann, werden Flussleiter magnetisch daran angekoppelt und eine magnetische Wirkverbindung zur Übertragung des Magnetflusses erzeugt.

Es kann optional ein Sicherungselement in dem Sensorgehäuse angeordnet werden, welches die Flussleiter in ihrer Position in den Ausrichtmitteln sichert, wie dies oben für die Sensorvorrichtung beschrieben ist.

Im nächsten Schritt (d) erfolgt das Einfüllen eines flüssigen, aushärtbaren Vergussharzes in das Sensorgehäuse. Dies kann bevorzugt durch Eingießen in die offene Oberseite erfolgen, wobei der Boden unten liegt.

Als Vergussmasse wird ein Harz-Härter-System, bevorzugt auf Basis von Epoxydharz oder dergleichen, in flüssiger Form bereitgestellt und in den Innenraum des Sensorgehäuses eingegossen. Bevorzugt wird das Sensorgehäuse dabei so ausgerichtet, dass der Boden in Schwerkraftrichtung unten liegt, und das flüssige Harz durch die offene Oberseite eingefüllt werden kann. Dadurch umfließt das flüssige Harz die sich im Sensorgehäuse befindenden Teile der Flussleiter und die Ausrichtmittel.

Bevorzugt werden auch zumindest Teilabschnitte der Flussleiter und, soweit vorhanden, ein Sicherungselement in die Vergussmasse eingebettet.

Das zunächst flüssige Kunstharz steht an den Flussleitern, den Ausrichtmitteln und dem Magnetsensor an. Das flüssige Harz umfließt aufgrund seiner gegebenen initialen Viskosität und Oberflächenspannung vorzugsweise allein unter dem Einfluss der Schwerkraft die darin eingebetteten Elemente und härtet im nachfolgenden Schritt (e) mit fortschreitender Zeit durch Vernetzung aus, bis es zu einem festen, den Innenraum zumindest teilweise ausfüllenden Block erstarrt.

Ein Vorteil des erfindungsgemäßen Verfahrens ist, dass die in den Positioniermitteln fixierte Leiterplatte durch die fluiddynamischen Kräfte beim Einfüllen des Harzes mit hoher Genauigkeit in Position bleibt, insbesondere auch relativ zu den Flussleitern. Mit anderen Worten wird die bezüglich der magnetischen Wirkverbindung optimierte Positionierung nicht gestört oder beeinträchtigt. Dies ist ein wesentlicher Vorteil gegenüber Spritzgussverfahren, bei denen die Kunststoffschmelze mit hohem Druck und hoher Geschwindigkeit eingespritzt wird, wodurch die Gefahr von unerwünschten Relativbewegungen auftritt.

Vorzugsweise erfolgt das Einfüllen oder Eingießen des Vergussharzes in einem Niederdruckverfahren. Bevorzugt kann das Einfüllen des flüssigen Harzes unter Atmosphärendruck durch Schwerkraft in das kasten- oder becherförmige Sensorgehäuse erfolgen. Dabei wirken nur relativ geringe fluiddynamische Kräfte, so dass die Leiterplatte und die Flussleiter nicht oder zumindest nicht merklich aus ihrer vorgegebenen Position bewegt werden.

Nach dem Aushärten des Vergussharzes kann ein magnetisches Ankoppeln der Flussleiter, die aus dem mit der Vergussmasse gefüllten Sensorgehäuse herausragen, an Statorelemente erfolgen, die im Magnetfeld eines um eine Achse rotierbaren Magneten angeordnet sind. In den äußeren, nach außen durch den Boden hinausragenden Teilabschnitten weisen die Flussleiter bevorzugt äußere Ankopplungsabschnitte auf, die zur Erzeugung eines effektiven magnetischen Übergangs mit den Statorelementen magnetisch wirkverbindbar sind, d.h. an diese ankoppelbar sind. Ein Vorteil der Erfindung ist, dass die Leiterplatte und bevorzugt auch die Flussleiter nach dem Aushärten der Vergussmasse räumlich fest relativ zum Sensorgehäuse fixiert und definiert positioniert sind. Dadurch kann auch eine räumlich genau definierte Verbindung an die Statorelemente einfacher erzeugt werden, wodurch die Montage vereinfacht und die Betriebssicherheit erhöht wird.

### Beschreibung der Zeichnungen

Vorteilhafte Ausführungsformen der Erfindung werden im Folgenden anhand der Zeichnungen näher erläutert. Im Einzelnen zeigen:
- Figur 1: ein Kraftfahrzeuglenksystem in einer schematischen perspektivischen Ansicht,
- Figur 2: eine vergrößerte Detailansicht der Sensorvorrichtung des Lenksystems gemäß Figur 1 in einer freigestellten schematischen Ansicht,
- Figur 3: eine erfindungsgemäße Sensorvorrichtung gemäß Figur 2 in einer schematisch auseinander gezogenen Teildarstellung des Sensorgehäuses und der darin angeordneten Komponenten,
- Figur 4: eine Ansicht von oben auf die Sensorvorrichtung gemäß Figur 3,
- Figuren 5 - 7: schematische perspektivische Ansichten des Sensorgehäuses der Sensorvorrichtung gemäß Figur 3 und 4 aus unterschiedlichen Blickwinkeln,
- Figuren 8 - 10: das Sensorgehäuse gemäß Figuren 3 bis 7 zusammen mit Flussleitern in einer schematisch auseinander gezogenen perspektivischen Ansicht aus unterschiedlichen Blickwinkeln,
- Figur 11: das Sensorgehäuse gemäß den Figuren 3 bis 10 mit einem Magnetsensor in einer schematisch auseinander gezogenen perspektivischen Ansicht,
- Figur 12: das Sensorgehäuse gemäß Figur 11 in zusammengesetztem Zustand mit eingesetztem Magnetsensor,
- Figur 13: das Sensorgehäuse gemäß den Figuren 3 bis 12 mit einem Deckelelement in einer schematisch auseinander gezogenen perspektivischen Ansicht,
- Figur 14: einen Schnitt B-B (Längsschnitt) wie in Figur 4 angegeben durch das Sensorgehäuse und einen Flussleiter gemäß Figur 13 mit einem eingesetztem Deckelement; in einer ersten Ausführungsform, in der das Deckelelement nicht in Kontakt mit den Flussleitern steht,
- Figur 15: das Sensorgehäuse gemäß den Figuren 3 bis 13 mit dem Deckelelement in eingesetztem Zustand,
- Figuren 16, 17, 18: einen Schnitt A-A (Längsschnitt) wie in Figur 4 angegeben durch das Sensorgehäuse und den Magnetsensor (Leiterplatte) im eingesetzten Zustand gemäß Figur 15 in aufeinander folgenden Fertigungszuständen beim Einfüllen einer flüssigen Vergussmasse,
- Figur 19: eine schematische perspektivische Ansicht einer gemäß Figur 18 gefertigten Sensorvorrichtung,
- Figur 20: einen Schnitt ähnlich des Schnittes B-B (Längsschnitt) wie in Figur 4 angegeben durch eine Sensorvorrichtung gemäß Figur 12, mit einer vergrößerten Detaildarstellung; in einer zweiten Ausführungsform, in der das Deckelelement mit den Flussleitern in berührendem Kontakt steht,
- Figur 21: einen Schnitt ähnlich des Schnittes A-A (Längsschnitt) wie in Figur 4 angegeben durch eine Sensorvorrichtung gemäß Figur 12, mit einer vergrößerten Detaildarstellung; in einer Ausführungsform, in der das Deckelelement in berührendem Kontakt mit der Leiterplatte steht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

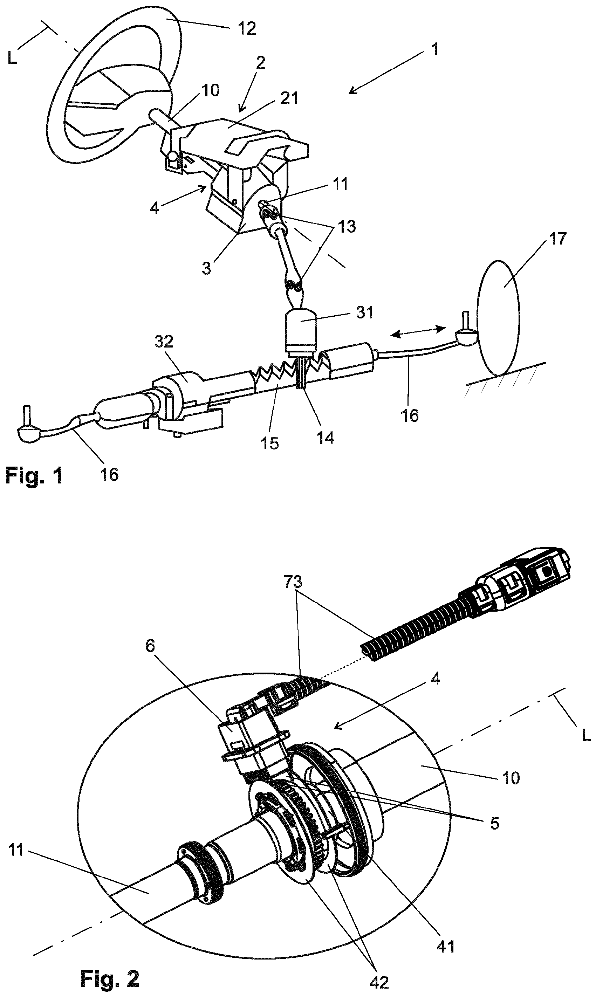

In Figur 1 ist ein als elektromechanische Hilfskraftlenkung ausgebildetes Kraftfahrzeuglenksystem 1 schematisch dargestellt. Diese weist eine Lenksäule 2 mit einer Trageinheit 21 auf, die an einer nicht dargestellten Karosserie eines Kraftfahrzeugs anbringbar ist.

In der Lenksäule 2 ist ein erstes, oberes Lenkwellenteil 10 einer Lenkwelle um eine Längsachse L drehbar gelagert. An dem bezüglich der Fahrtrichtung hinteren Ende ist an dem Lenkwellenteil 10 ein Lenkrad 12 drehfest angebracht, über welches ein Fahrer ein Lenkmoment (Handmoment) als Lenkbefehl in das obere Lenkwellenteil 10 einbringen kann.

Das obere Lenkwellenteil 10 ist über einen hier nicht dargestellten torsionselastischen Drehstab mit einem zweiten, unteren Lenkwellenteil 11 verbunden.

Das Lenkmoment wird über die Lenkwellenteile 10 und 11 über zwischengeschaltete Kreuzgelenke 13 auf ein Lenkritzel 14 übertragen, welches in eine längsverschieblich gelagerte Zahnstange 15 eingreift. Diese setzt eine Drehung der Lenkwelle 10 bei einem Lenkeingriff in eine Verschiebung von Spurstangen 16 um, wie mit dem Doppelpfeil angedeutet, welche den vorgegebenen Lenkeingriff als Lenkeinschlag auf die lenkbaren Räder 17 des Kraftfahrzeugs übertragen.

Eine elektrische Hilfskraftunterstützung kann einen an der Lenksäule 2 angebrachten, mit der Lenkwelle 10 gekoppelten Hilfskraftantrieb 3, oder einen am Ritzel 14 mit dem Lenkwellenteil 11 gekoppelten Hilfskraftantrieb 31 aufweisen, wobei die Hilfskraftantriebe 3 und 31 gleichartig aufgebaut sein können. Durch den Hilfskraftantrieb 3 oder 31 kann ein Hilfsdrehmoment in die untere Lenkwelle 11 und/oder das Lenkritzel 14 eingekoppelt werden, um den Fahrer bei der Lenkarbeit zu unterstützten.

Es kann auch ein Hilfskraftantrieb 32 vorgesehen sein, um eine die Lenkung unterstützende Hilfskraft in die Zahnstange 15 einzubringen.

Üblicherweise ist nur an einer der gezeigten drei Positionen ein Hilfskraftantrieb 3, 31 oder 32 angebracht. Das Hilfsdrehmoment bzw. die Hilfskraft, welche zur Unterstützung des Fahrers mittels der jeweiligen Hilfskraftantrieb 3, 31 oder 32 aufgebracht werden soll, wird unter Berücksichtigung eines von einer Sensorvorrichtung 4 ermittelten, vom Fahrer manuell eingebrachten Lenkmoments bestimmt. Hierzu weist die Sensorvorrichtung 4 einen Drehmomentsensor auf, der die von der Größe des manuell eigebrachten Lenkmoments abhängige relative Verdrehung der Lenkwellenteile 10 und 11 erfasst. Weiterhin ist bevorzugt ein Drehwinkelsensor vorgesehen, zur Erfassung der Winkelstellung des Lenkwellenteils 10 und/oder 11.

Die Sensorvorrichtung 4 ist zwischen dem oberen Lenkwellenteil 10 und dem unteren Lenkwellenteil 11 angebracht, wie in der vergrößerten Darstellung von Figur 2 erkennbar ist, welche eine schematische perspektivische Ansicht der Lenksäule 2 aus Figur 1 vergrößert zeigt.

An dem Lenkwellenteil 10 ist koaxial ein Ringmagnet 41 angebracht, der innerhalb von zwei ringförmigen Statorelementen 42 angeordnet ist, die koaxial an dem zweiten Lenkwellenteil 11 angebracht sind.

Die beiden Statorelemente 42 sind magnetisch leitend an zwei Flussleiter 5 angekoppelt, die in den Innenraum eines erfindungsgemäß ausgestalteten Sensorgehäuses 6 hineingeführt sind.

Das Sensorgehäuse 6 ist zur Erläuterung der Sensorvorrichtung 4 und des erfindungsgemäßen Verfahrens im Folgenden in unterschiedlichen Darstellungen und Montagezuständen gezeigt.

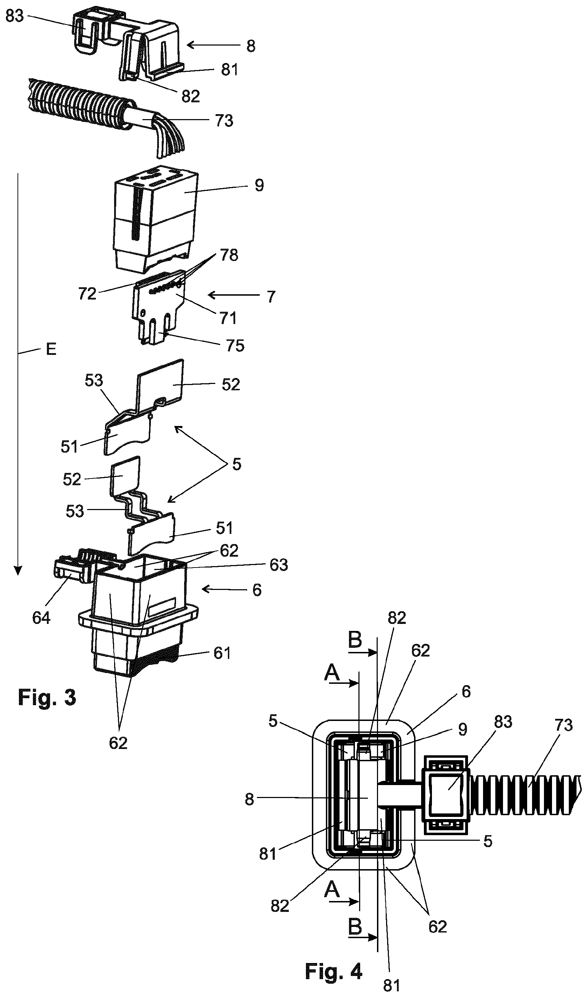

Figur 3 zeigt eine in vertikaler Richtung auseinander gezogene Explosionsdarstellung, in der das Sensorgehäuse 6 unten angeordnet ist.

Eine Einsetzrichtung E weist definitionsgemäß, bevorzugt in Richtung der Schwerkraft, von oben nach unten und wird im Folgenden durchgehend zur Bezeichnung der Orientierung verwendet.

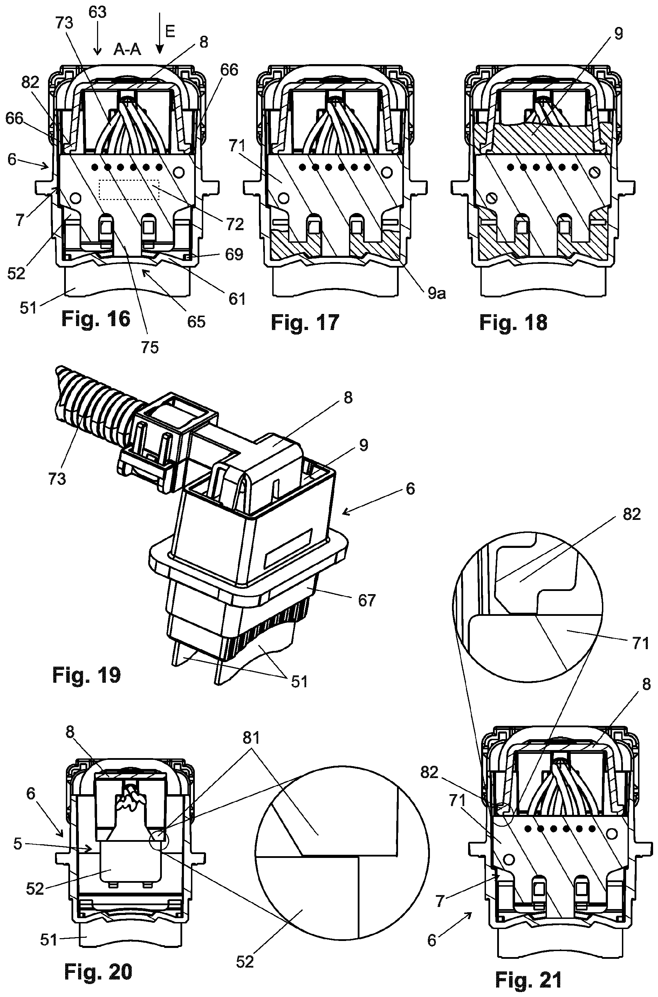

Die beiden Flussleiter 5, ein Magnetsensor 7 und Deckelelement 8, gleichbedeutend auch als Sicherungselement 8 bezeichnet, werden erfindungsgemäß in eine Vergussmasse 9 eingebettet, die in Figur 3 als Block dargestellt ist, der in fertigem Zustand den Innenraum des Sensorgehäuses zumindest teilweise, bevorzugt größtenteils ausfüllt. In dem fertigen Zustand, der beispielsweise in Figur 19 gezeigt ist, sind die vorgenannten Komponenten 5, 7, 8 form- und stoffschlüssig unlösbar von der festen Vergussmasse 9 umschlossen und im Innenraum des Sensorgehäuses 6 fixiert.

Das Sensorgehäuse 6 ist bevorzugt als Kunststoff-Spritzgussteil aus einem thermoplastischen Polymer ausgebildet. Es ist im gezeigten Beispiel kastenförmig ausgebildet mit einem untenliegenden Boden 61, von dem sich Seitenwandungen 62 nach oben erstrecken. Die nach oben offene Oberseite bildet eine entgegen der Einsetzrichtung E offene Öffnung 63.

Die Flussleiter 5 sind aus magnetisch gut leitfähigem Material gefertigt, beispielsweise als Blechformteile aus Stahlblech. Diese weisen jeweils einen untenliegenden Ankopplungsabschnitt 51 und einen obenliegenden Ankopplungsabschnitt 52 auf, die über Verbindungsabschnitte 53 vorzugsweise einstückig miteinander verbunden sind.

Der Magnetsensor 7 umfasst eine flache, plattenförmige Leiterplatte 71, die gleichbedeutend auch als Platine 71 bezeichnet wird und sich parallel zur Einsetzrichtung E erstreckt, bevorzugt senkreckt zu einem Paar einander gegenüberliegender Seitenwandungen 62 des Sensorgehäuses 6.

Auf der Leiterplatte 71 ist ein Sensorelement 72 angebracht, beispielsweise ein GMR- oder Hall-Sensor. Das Sensorelement 72 ist über im einzelnen nicht gezeigte elektrischen Leiterbahnen der Leiterplatte 71 mit einem Anschlusskabel 73 elektrisch leitend verbunden, beispielsweise mittels Lötverbindungen 78.

Das Deckelelement 8 ist oberhalb der Flussleiter 5 und des Magnetsensors 7 angeordnet. Es kann bevorzugt als Kunststoff-Spritzgussteil ausgebildet sein und kannals Sicherungselement, um die Flussleiter 5 und den Magnetsensor 7 im Inneren des Sensorgehäuses 6 entgegen der Einsetzrichtung E zu sichern, dienen, wie weiter unten noch erläutert wird. Dazu kann es in Einsetzrichtung E gegen die Leiterplatte 71 und die Flussleiter 5 gerichtete Sicherungsabschnitte 81 und 82 aufweisen. Werden die Flussleiter 5 und der Magnetsensor 7 nicht vom Deckelelement gesichert, so dienen die Sicherungsabschnitte 81 und 82 zumindest der Fixierung des Deckelelements 8 im Gehäuse 6. Zumindest mit den Sicherungsabschnitten 81 und 82 ist das Deckelement 8 in die Vergussmasse 9 eingebettet. Es kann weiterhin ein Halteelement 83 - bevorzugt einstückig - ausgebildet sein, welches mit dem Sensorgehäuse 6 zur Festlegung des Anschlusskabels 73 verbindbar ist, beispielsweise mittels einer in Einsetzrichtung E in Eingriff bringbaren Rastverbindung 64 des Sensorgehäuses 6.

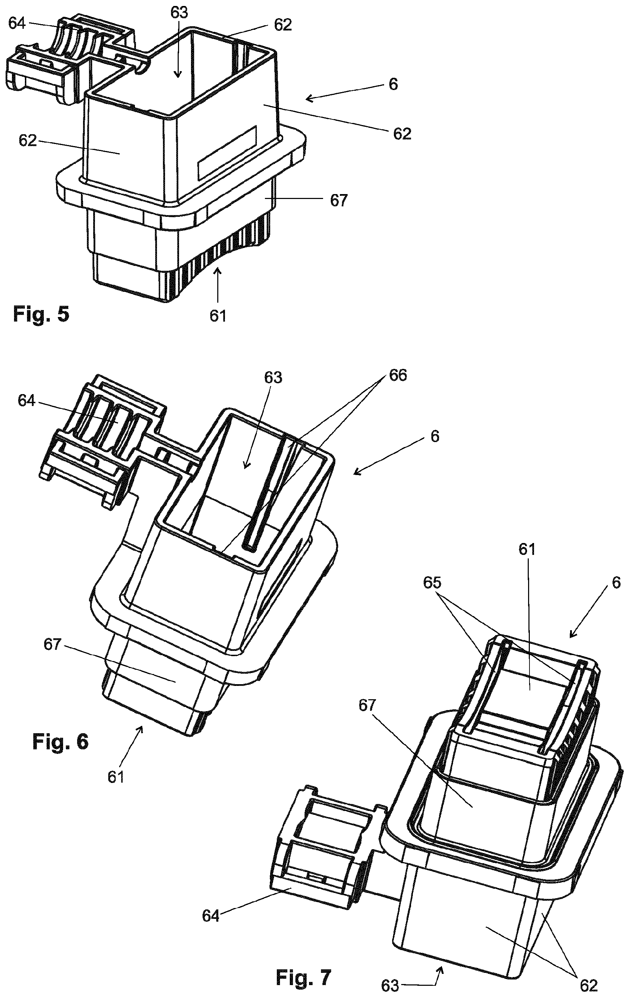

In den Figuren 5, 6 und 7 ist das Sensorgehäuse 6, welches im gezeigten Beispiel als einstückiges Kunststoff-Spritzgussteil aus einem thermoplastischen Polymer ausgebildet ist, separat freigestellt gezeigt, und zwar in Figuren 5 und 6 schräg von oben, mit Blick in die offene Oberseite 63, und in Figur 7 schräg von unten, mit Blick auf den Boden 61.

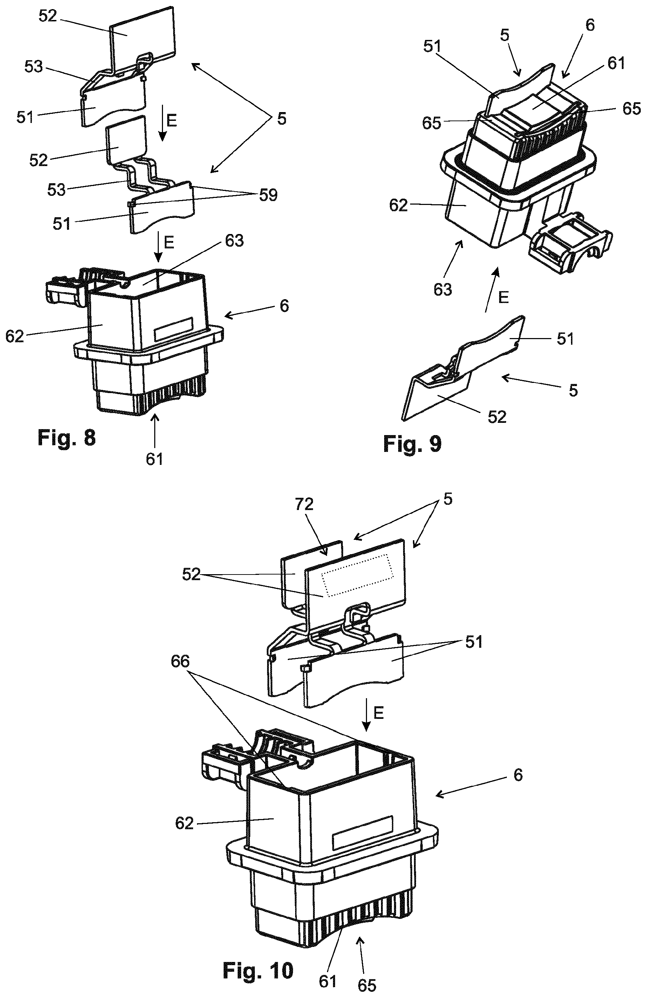

In Figur 7 ist erkennbar, dass im Boden 61 zwei schlitzförmige Durchgangsöffnungen 65 ausgebildet sind. Der Öffnungsquerschnitt der Durchgangsöffnungen 65 ist an den Querschnitt jeweils eines Ankopplungsabschnitts 51 eines Flussleiters 5 derart angepasst, dass der Ankopplungsabschnitt 51 von oben durch die offene Oberseite 63 nach unten in das Sensorgehäuse 6 in Einsetzrichtung E eingesetzt werden kann, wie dies in Figur 8 mit Pfeilen E angedeutet ist. Dabei werden die Ankopplungsabschnitte 51 nach unten, und durch die Durchgangsöffnungen 65 zumindest teilweise nach außen hindurchgeführt. In Figur 9 (oben) ist einer der Flussleiter 5 bereits derart eingesetzt, und der andere Flussleiter 5 (in der Figur 9 unten) befindet sich noch in der Lage vor dem Einsetzen, wie in Figur 8. Dabei können sowohl Montageverfahren vorgesehen sein, bei denen die Flussleiter 5 zuerst relativ zueinander positioniert werden, bevor sie in das Sensorgehäuse 6 eingepasst werden, als auch Montageverfahren, bei denen die Flussleiter 5 einzeln und nacheinander in das Sensorgehäuse 6 eingepasst werden.

Die Ankopplungsabschnitte 51 werden bevorzugt passgenau mit geringem Spiel in die Durchgangsöffnungen 65 eingesetzt, oder haben sogar Übermaß gegenüber der Durchgangsöffnung 65, so dass sie ohne Spiel unter elastischer Aufweitung in die Durchgangsöffnungen 65 eingepresst werden können. Dadurch werden die Flussleiter 5 beim Einsetzen in die Durchgangsöffnungen 65 im Innenraum des Sensorgehäuses 6 relativ zueinander ausgerichtet, wie dies in Figur 10 schematisch im Zustand vor dem Einsetzen gezeigt ist, also vor dem auf das Einsetzen der Flussleitern 5 durch die Durchgangsöffnungen 65 hindurch gerichteten Schritt des Verfahrens. Dadurch werden die inneren Ankopplungsabschnitte 52 einander gegenüberliegend mit hoher Genauigkeit parallel zueinander, und auch parallel zur Einsetzrichtung E im Innenraum des Sensorgehäuses ausgerichtet und positioniert.

Entsprechend stellen die Durchgangsöffnungen 65 Ausrichtmittel für die Flussleiter 5 im Sinne der Erfindung dar. Zusätzliche Ausrichtelemente in Form von Zähnen, die wahlweise an den Flussleitern 5 (dargestellt in Figur 8 mit Bezugszeichen 59) oder im Sensorgehäuse 6 (dargestellt in Figur 16 mit Bezugszeichen 69) ausgebildet sind und die Flussleiter 5 und das Gehäuse 6 zusätzlich relativ zueinander positionieren, können ebenfalls vorgesehen sein.

Die nach unten aus dem Boden 61 vorstehenden Ankopplungsabschnitte 51 können an die Statorelemente 42 magnetisch angekoppelt werden, d.h. zur Übertragung des magnetischen Flusses in Wirkverbindung gebracht werden.

In Figuren 5 und 6 ist erkennbar, dass an den einander gegenüberliegenden Innenseiten des Sensorgehäuses 6 Führungselemente 66 ausgebildet sind, die als in Einsetzrichtung E vom Rand der offenen Oberseite 63 nach unten verlaufende Nuten 66 ausgebildet sind. Diese Nuten 66 sind einstückig im Spritzguss eingeformt. Die Nuten 66 sind so bemessen, dass die Leiterplatte 71 des Magnetsensors 7 darin in Einsetzrichtung E durch die offene Oberseite 83 einsetzbar ist.

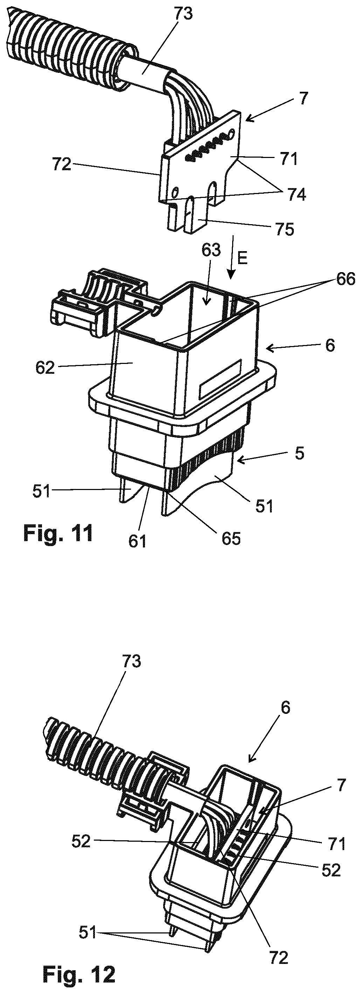

Im nächsten Schritt, der in Figur 11 dargestellt ist, wird der Magnetsensor 7 in Einsetzrichtung E von oben in die offenen Oberseite 63 eingebracht, und zwar so, dass die seitlichen Ränder der Leiterplatte 71 in den Nutquerschnitt der Nuten 66 eingeführt werden.

Es kann vorgesehen sein, dass die Leiterplatte Umformmittel 74 aufweist, wie in Figur 11 gezeigt. Diese können ausgebildet sein zur plastischen oder elastischen Umformung von Positioniermitteln, beispielsweise der Nuten 66. Die Umformmittel 74 können im Einzelnen derart ausgebildet und an der Leiterplatte 71 angeordnet sein, dass sie eine Art Umformwerkzeug bilden, durch welches das Sensorgehäuse 6 im Bereich der Nuten 66 (Positioniermittel) beim Einsetzen der Leiterplatte 71 umformend bearbeitet wird. Die Umformmittel 74 können beispielsweise mindestens eine Schneidkante aufweisen, so dass sich die Umformmittel 74 beim Einsetzen in Einsetzrichtung E in das Material des Sensorgehäuses 6 plastisch eingraben, wodurch eine optimal an die Form und die Abmessungen der Leiterplatte 71 angepasste Formschlussaufnahme erzeugt wird. Die Umformmittel 74 können definierte Schneidkanten, und auch undefinierte Schneidkanten wie Schleifmittel, und zusätzlich oder alternativ andere Mittel zur plastischen Verformung aufweisen, wie Dorne, Keile oder dergleichen, welche beim Einsetzen eine plastische und/oder elastische Verformung erzeugen, die beispielsweise zum Einklemmen der Leiterplatte 71 genutzt werden.

Die Nuten 66 stellen Positioniermittel im Sinne der Erfindung zur definierten Positionierung der Leiterplatte 71 und damit des Magnetsensors 7 in dem Sensorgehäuse 6 dar.

Als weiteres Positioniermittel kann die Leiterplatte 71 einen in Einführrichtung E, d.h. nach unten vorstehenden Vorsprung 75 haben. Dieser bildet ein Art Anschlagelement, welches beim vollständigen Einsetzen der Leiterplatte 71 von innen am Boden 61 anschlägt, und dadurch die Position der Leiterplatte 71 eindeutig definiert.

Figur 12 zeigt den vormontierten Zustand, in dem Leiterplatte 71 derart in dem Innenraum des Sensorgehäuses 6 positioniert ist, dass das Sensorelement 72 räumlich genau zwischen den Ankopplungsabschnitten 52 positioniert ist, wie in Figur 12 angedeutet, und schematisch gestrichelt in Figur 10 und 16 dargestellt ist.

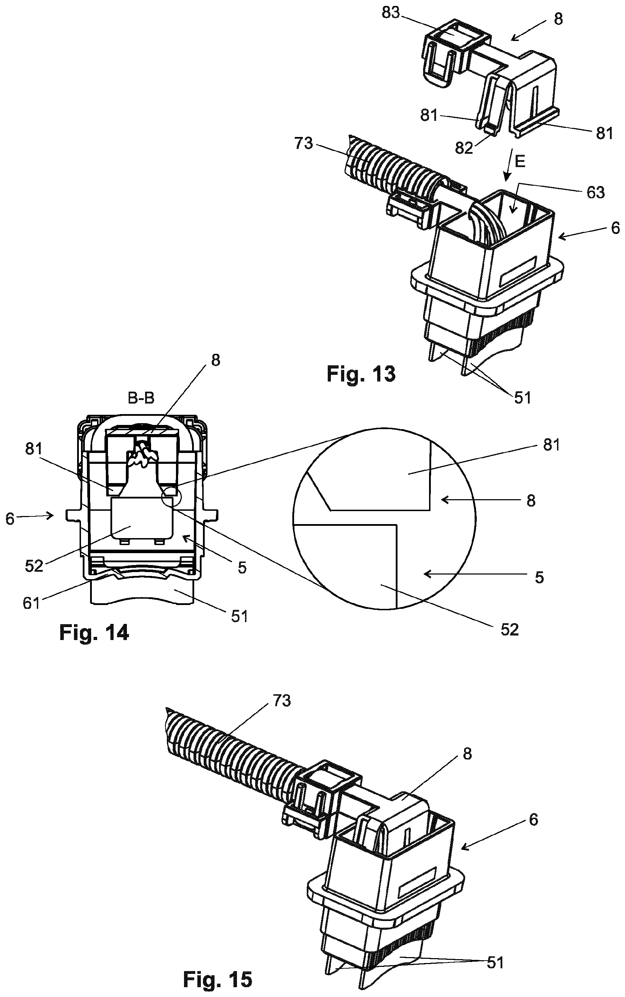

Im nächsten Schritt, der in Figur 13 gezeigt ist, erfolgt das Einsetzen des Deckelelements 8, vorzugsweise ebenfalls in Einsetzrichtung E. Dabei wird es so weit durch die offene Oberseite 63 in den Innenraum des Sensorgehäuses 6 eingeführt, bis die unten am Deckelelement 8 angeordneten Sicherungsabschnitte 81 entweder nur ein geringes Spiel in Einsetzrichtung zu den Oberkanten der obenliegenden Ankopplungsabschnitte 52 der Flussleiter 5 haben oder diese in berührendem Kontakt miteinander stehen, wie in dem Schnitt B-B aus Figur 4 in Figur 14 (berührungsfrei) oder im selben Schnitt in Figur 20 (berührend) gezeigt ist. Dadurch sind die Flussleiter 5 entgegen der Einsetzrichtung E gegen Herausbewegen aus den Durchgangsöffnungen 65 gesichert.

Mit dem Anbringen des Deckelelements 8 ist die Vormontage zunächst abgeschlossen, wobei die Flussleiter 5 relativ zueinander und zum Magnetsensor 7 und innerhalb des Innenraums des Sensorgehäuses 6 eindeutig und sicher definiert angeordnet und gesichert sind. Figur 15 zeigt diesen vormontierten Zustand in einer perspektivischen Ansicht des Sensorgehäuses 6.

In den Figuren 16, 17 und 18 ist das Einfüllen der Vergussmasse 9 in aufeinander folgenden Phasen schematisch in einer Schnittdarstellung A-A gezeigt.

Figur 16 zeigt den vormontierten Zustand, in dem die Flussleiter 5 und der Magnetsensor 7 relativ zueinander und relativ zum Sensorgehäuse 6 durch die vorangehend beschriebenen Ausricht- und Positioniermittel definiert positioniert und fixiert sind. Dese Ausricht- und Positioniermittel umfassen unter anderem die Durchgangsöffnungen 65, die Nuten 66, den Vorsprung 74, sowie gegebenenfalls weitere Form- und/oder Kraftschlusselemente, wie beispielsweise die Zähne 59 oder/und 69.

Figur 17 zeigt einen Zwischenstand, in dem ein Teil der Vergussmasse 9 in Form eines flüssigen Harzes, beispielsweise eines Epoxydharz-Härter-Gemisches, von oben durch die offene Oberseite 63 hindurch eingegossen worden ist. Bei der teilweisen Füllung 9a ist der Boden 61 von innen bedeckt, und das zunächst flüssige Harz steht an den zwischen den Ankopplungsabschnitten 51 der Flussleiter 5 und den Rändern der Durchgangsöffnungen 65 umlaufenden Spalten an. Dadurch, dass die Spaltbreite entsprechend gering vorgegeben wird, wird das unter dem Einfluss der Schwerkraft anstehende flüssige Harz im Innenraum zurückgehalten, und tritt nicht nach außen, d.h. nach unten aus.

Das Einfüllen des flüssigen Harzes erfolgt, bis der Innenraum des Sensorgehäuses 6 größtenteils gefüllt ist, wie in dem in Figur 18 gezeigten End-Füllzustand. Dabei sind die Flussleiter 5, die Leiterplatte 71 des Magnetsensors 7 sowie das Deckelelement 8 und die vorgenannten Ausricht- und Positioniermittel erfindungsgemäß zumindest teilweise von dem Harz umschlossen.

Das Einfüllen des Harzes kann bevorzugt in einem Niederdruckverfahren erfolgen, beispielsweise unter normaler Atmosphäre, beispielsweise bei Raumtemperatur oder einer vorgegebenen Prozesstemperatur, bei der das Harz optimal aushärten kann.

Nach dem Aushärten bildet das Harz einen aus der Vergussmasse 9 gebildeten Block, in dem die Flussleiter 5, die Leiterplatte 71 des Magnetsensors 7 sowie das Deckelelement 8 und die vorgenannten Ausricht- und Positioniermittel form- und stoffschlüssig zumindest teilweise eingebettet und relativ zueinander und zum Sensorgehäuse 6 unlösbar fixiert sind. Es wird eine kompakte Einheit gebildet, wie sie perspektivisch in Figur 19 gezeigt ist. Dabei sind der Magnetsensor 7 und die in magnetischer Wirkverbindung mit ihren Ankopplungsabschnitten 52 daran magnetisch angekoppelten Flussleiter 5 durch die Vergussmasse robust und sicher positioniert und nach außen hermetisch abgedichtet in dem Sensorgehäuse 6 untergebracht. Die Ankopplungsabschnitte 51 stehen durch den Boden 61 des Sensorgehäuses 6 zumindest teilweise nach außen vor, und können mit korrespondierenden Ankopplungsabschnitten der Statorelemente 42 zur Übertragung des magnetischen Flusses ebenfalls in magnetische Wirkverbindung gebracht werden. Dabei kann die Verbindung unlösbar ausgestaltet sein, oder aus als lösbare Verbindung. Beispielsweise kann das Sensorgehäuse 6 im unteren Bereich einen Formschlussansatz 67 oder dergleichen, der in einer korrespondierenden Formschlussaufnahme der Sensorvorrichtung aufgenommen und verspannt oder anders fixiert werden kann, so dass eine magnetische Ankopplung an die Statorelemente 42 erfolgt.

In Figuren 20 und 21 sind Ausführungen des Deckelelements 8 gezeigt, welches die Sicherungselemente 81 und 82 aufweist, welche wahlweise als Niederhalter für die Leiterplatte 71 oder die Flusssammler 5 dienen können.

In der in Figur 20 gezeigten Ausführung stützen sich die Sicherungselemente 81 im Kontakt von oben gegen die Ankopplungsabschnitte 52 der Flussleiter 5 ab, anders als in Figur 14 ohne Spiel. Dadurch wird die Position der Flussleiter vor und beim Einfüllen der Vergussmasse 9 gesichert.

Die in Figur 21 gezeigte Ausführung kann allein realisiert sein, oder in Kombination mit einer den Ausführungen gemäß Figur 14 oder Figur 20. Darin stützen sich die Sicherungselemente 82 im Kontakt von oben gegen die Leiterplatte 71 des Magnetsensors 7 ab, und sichern dessen Position beim Einfüllen der Vergussmasse 9.

### Bezugszeichenliste

- 1: Lenksystem
- 10: Lenkwellenteil
- 11: Lenkwellenteil
- 12: Lenkrad
- 13: Kreuzgelenk
- 14: Ritzel
- 15: Zahnstange
- 16: Spurstange
- 17: Rad
- 2: Lenksäule
- 21: Trageinheit
- 3,31: Hilfskraftantrieb
- 4: Sensorvorrichtung
- 41: Ringmagnet
- 42: Statorelement
- 5: Flussleiter
- 51,52: Ankopplungsabschnitte
- 59: Zähne an Flussleitern
- 6: Sensorgehäuse
- 61: Boden
- 62: Seitenwandungen
- 63: Oberseite (offen)
- 64: Rastverbindung
- 65: Durchgangsöffnungen
- 66: Nut (Führungselement)
- 67: Formschlussansatz
- 69: Zähne im Sensorgehäuse
- 7: Magnetsensor
- 71: Leiterplatte
- 72: Sensorelement
- 73: Anschlusskabel
- 74: Umformmittel
- 75: Vorsprung
- 8: Deckelelement (Sicherungselement)
- 81,82: Sicherungsabschnitte
- 83: Halteelement
- 9: Vergussmasse
- 9a: teilweise Füllung
- L: Längsachse
- E: Einsetzrichtung
- A: Längsrichtung
- B: Breite

## Patentansprüche

1. Sensorvorrichtung (4) für ein Kraftfahrzeug-Lenksystem (1), umfassend ein Sensorgehäuse (6), in dem ein elektrischer Magnetsensor (7) angeordnet und an magnetische Flussleiter (5) angekoppelt ist, und wobei die Flussleiter (5) mit Statorelementen (42) verbindbar sind, wobei die Statorelemente (42) im Magnetfeld eines um eine Achse (L) rotierbaren Magneten (41) positionierbar sind,
wobei das Sensorgehäuse (6) mit einer Vergussmasse (9) gefüllt ist,
**dadurch gekennzeichnet,**
**dass** die Flussleiter (5) durch Durchgangsöffnungen (65) in dem Sensorgehäuse (6) nach außen hindurchgeführt sind, wo sie mit den Statorelementen (42) verbunden sind.

2. Sensorvorrichtung nach Anspruch 1, **dadurch gekennzeichnet, dass** das Sensorgehäuse (6) ein Kunststoff-Spritzgussteil aufweist.

3. Sensorvorrichtung nach einem der vorangehenden Ansprüche, **dadurch gekennzeichnet, dass** die Durchgangsöffnungen (65) in einem unten angeordneten Boden (61) des Sensorgehäuses (6) angeordnet sind.

4. Sensorvorrichtung nach einem der vorangehenden Ansprüche, **dadurch gekennzeichnet dass** die Flussleiter (5) in die Durchgangsöffnungen (65) passgenau eingesetzt sind.

5. Sensorvorrichtung nach einem der vorangehenden Ansprüche, **dadurch gekennzeichnet, dass** die Flussleiter (5) und die Durchgangsöffnungen (65) korrespondierende Dichtungselemente aufweisen.

6. Sensorvorrichtung nach einem der vorangehenden Ansprüche, **dadurch gekennzeichnet, dass** die Flussleiter (5) von innen durch die Durchgangsöffnungen (65) eingesetzt sind.

7. Sensorvorrichtung nach einem der vorangehenden Ansprüche, **dadurch gekennzeichnet, dass** die Flussleiter (5) und die Durchgangsöffnungen (65) korrespondierende Anschlagelemente aufweisen.

8. Sensorvorrichtung nach einem der vorangehenden Ansprüche, **dadurch gekennzeichnet, dass** die Flussleiter (5) Ankopplungsabschnitte (59,69) aufweisen.

9. Sensorvorrichtung nach einem der vorangehenden Ansprüche, **dadurch gekennzeichnet, dass** der Magnetsensor (7) auf einer Leiterplatte (71) angebracht ist.

10. Sensorvorrichtung nach einem der vorangehenden Ansprüche, **dadurch gekennzeichnet, dass** ein aus dem Sensorgehäuse (6) herausgeführtes Anschlusskabel (73) an den Magnetsensor (7) angeschlossen ist.

11. Sensorvorrichtung nach einem der vorangehenden Ansprüche, **dadurch gekennzeichnet, dass** sie einen Drehmomentsensor und/oder einen Drehwinkelsensor umfasst.

12. Lenksystem für ein Kraftfahrzeug, umfassend eine Sensorvorrichtung nach einem der vorangehenden Ansprüche 1 bis 11.

13. Verfahren zur Herstellung einer Sensorvorrichtung (4), bei dem in einem Sensorgehäuse (6) ein Magnetsensor (7) magnetisch an Flussleiter (5) angekoppelt ist, wobei die Flussleiter magnetisch an im Magnetfeld eines Magneten positionierbare Statorelemente (42) ankoppelbar sind,
**gekennzeichnet durch die Schritte:**
a) Bereitstellen eines Durchgangsöffnungen (65) aufweisenden Sensorgehäuses,
b) Einsetzen von Flussleitern (5) **durch** die Durchgangsöffnungen (65) hindurch,
c) Positionieren eines Magnetsensors (7) in dem Sensorgehäuse (6) zur magnetischen Ankopplung an die **durch** die Durchgangsöffnungen (65) hindurchgeführten Flussleiter (5),
d) Einfüllen eines flüssigen, aushärtbaren Vergussharzes (9) in das Sensorgehäuse (6),
e) Aushärten des Vergussharzes,
f) Ankoppeln der Flussleiter (5) an die Statorelemente (42).

14. Verfahren nach Anspruch 13, **dadurch gekennzeichnet, dass** das Einfüllen des Vergussharzes in einem Niederdruckverfahren erfolgt.

15. Verfahren nach einem der Ansprüche 13 bis 14, **dadurch gekennzeichnet, dass** die Durchgangsöffnungen (65) in einem Boden (61) des Sensorgehäuses (6) angeordnet sind, der beim Einfüllen des flüssigen Vergussharzes (9) unten liegt.

## Claims

1. Sensor device (4) for a motor vehicle steering system (1), comprising a sensor housing (6) in which an electrical magnetic sensor (7) is arranged and coupled to magnetic flux conductors (5), and wherein the flux conductors (5) can be connected to stator elements (42), wherein the stator elements (42) can be positioned in the magnetic field of a magnet (41) rotatable about an axis (L),
the sensor housing (6) being filled with a potting compound (9),
**characterized in**
**in that** the flux conductors (5) are led through through-openings (65) in the sensor housing (6) to the outside, where they are connected to the stator elements (42).

2. Sensor device according to claim 1, **characterized in that** the sensor housing (6) comprises a plastic injection-molded part.

3. Sensor device according to one of the preceding claims, **characterized in that** the through-holes (65) are arranged in a bottom (61) of the sensor housing (6) arranged at the bottom.

4. Sensor device according to one of the preceding claims, **characterized in that** the flow conductors (5) are inserted into the through openings (65) with a precise fit.

5. Sensor device according to one of the preceding claims, **characterized in that** the flow conductors (5) and the through openings (65) have corresponding sealing elements.

6. Sensor device according to one of the preceding claims, **characterized in that** the flow conductors (5) are inserted from the inside through the through openings (65).

7. Sensor device according to one of the preceding claims, **characterized in that** the flow conductors (5) and the through openings (65) have corresponding stop elements.

8. Sensor device according to one of the preceding claims, **characterized in that** the flux conductors (5) have coupling sections (59, 69).

9. Sensor device according to one of the preceding claims, **characterized in that** the magnetic sensor (7) is mounted on a printed circuit board (71).

10. Sensor device according to one of the preceding claims, **characterized in that** a connection cable (73) led out of the sensor housing (6) is connected to the magnetic sensor (7).

11. Sensor device according to one of the preceding claims, **characterized in that** it comprises a torque sensor and/or a rotation angle sensor.

12. A steering system for a motor vehicle, comprising a sensor device according to one of the preceding claims 1 to 11.

13. Method for manufacturing a sensor device (4), in which a magnetic sensor (7) is magnetically coupled to flux conductors (5) in a sensor housing (6), wherein the flux conductors can be magnetically coupled to stator elements (42) which can be positioned in the magnetic field of a magnet,
**characterized by the steps:**
a) Providing a sensor housing having through openings (65),
b) inserting flux conductors (5) through the through openings (65),
c) positioning a magnetic sensor (7) in the sensor housing (6) for magnetic coupling to the flux conductors (5) passed through the through openings (65),
d) filling a liquid, curable potting resin (9) into the sensor housing (6),
e) hardening of the potting resin,
f) coupling the flux conductors (5) to the stator elements (42).

14. Method according to claim 13, **characterized in that** the potting resin is filled in using a low-pressure process.

15. Method according to one of the claims 13 to 14, **characterized in that** the through-openings (65) are arranged in a base (61) of the sensor housing (6), which is at the bottom when the liquid potting resin (9) is filled in.

## Revendications

1. Dispositif de détection (4) pour un système de direction de véhicule automobile (1), comprenant un boîtier de capteur (6) dans lequel un capteur magnétique électrique (7) est disposé et couplé à des conducteurs de flux magnétique (5), et dans lequel les conducteurs de flux (5) peuvent être reliés à des éléments de stator (42), les éléments de stator (42) pouvant être positionnés dans le champ magnétique d'un aimant (41) pouvant tourner autour d'un axe (L),
le boîtier du capteur (6) étant rempli d'une masse de scellement (9),
**caractérisé en ce que**
**en ce que** les conducteurs de flux (5) sont passés à travers des ouvertures de passage (65) dans le boîtier de capteur (6) vers l'extérieur, où ils sont reliés aux éléments de stator (42).

2. Dispositif de détection selon la revendication 1, **caractérisé en ce que** le boîtier de capteur (6) comprend une pièce en matière plastique moulée par injection.

3. Dispositif de détection selon l'une des revendications précédentes, **caractérisé en ce que** les ouvertures de passage (65) sont disposées dans un fond (61) du boîtier de détection (6) situé en bas.

4. Dispositif de détection selon l'une des revendications précédentes, **caractérisé en ce que** les conducteurs de flux (5) sont insérés avec précision dans les ouvertures de passage (65).

5. Dispositif de détection selon l'une des revendications précédentes, **caractérisé en ce que** les conducteurs de flux (5) et les ouvertures de passage (65) présentent des éléments d'étanchéité correspondants.

6. Dispositif de détection selon l'une des revendications précédentes, **caractérisé en ce que** les conducteurs de flux (5) sont insérés de l'intérieur à travers les ouvertures de passage (65).

7. Dispositif de détection selon l'une des revendications précédentes, **caractérisé en ce que** les conducteurs de flux (5) et les ouvertures de passage (65) présentent des éléments de butée correspondants.

8. Dispositif de détection selon l'une des revendications précédentes, **caractérisé en ce que** les conducteurs de flux (5) présentent des sections de couplage (59, 69).

9. Dispositif de détection selon l'une des revendications précédentes, **caractérisé en ce que** le capteur magnétique (7) est monté sur une carte de circuit imprimé (71).

10. Dispositif de détection selon l'une des revendications précédentes, **caractérisé en ce qu'**un câble de raccordement (73) sortant du boîtier du capteur (6) est raccordé au capteur magnétique (7).

11. Dispositif de détection selon l'une des revendications précédentes, **caractérisé en ce qu'**il comprend un capteur de couple et/ou un capteur d'angle de rotation.

12. Système de direction pour un véhicule automobile, comprenant un dispositif de détection selon l'une des revendications 1 à 11 précédentes.

13. Procédé de fabrication d'un dispositif de détection (4), dans lequel un capteur magnétique (7) est couplé magnétiquement à des conducteurs de flux (5) dans un boîtier de capteur (6), les conducteurs de flux pouvant être couplés magnétiquement à des éléments de stator (42) positionnables dans le champ magnétique d'un aimant,
**caractérisé par les étapes suivantes** :
a) Préparation d'un boîtier de capteur présentant des ouvertures de passage (65),
b) Insertion de conducteurs de flux (5) à travers les ouvertures de passage (65),
c) Positionnement d'un capteur magnétique (7) dans le boîtier de capteur (6) pour le couplage magnétique avec les conducteurs de flux (5) introduits à travers les ouvertures de passage (65),
d) remplissage du boîtier du capteur (6) avec une résine de scellement liquide et durcissable (9),
e) durcissement de la résine de scellement,
f) couplage des conducteurs de flux (5) aux éléments de stator (42).

14. Procédé selon la revendication 13, **caractérisé en ce que** le remplissage de la résine de scellement est effectué par un procédé à basse pression.

15. Procédé selon l'une des revendications 13 à 14, **caractérisé en ce que** les orifices de passage (65) sont disposés dans un fond (61) du boîtier de capteur (6) qui se trouve en bas lors du remplissage de la résine de scellement liquide (9).
